(19) Europäisches Patentamt
European Patent Office
Office européen des brevets

(11) **EP 4 236 506 A1**

(12) **EUROPEAN PATENT APPLICATION**

(43) Date of publication:
**30.08.2023 Bulletin 2023/35**

(21) Application number: **22158153.1**

(22) Date of filing: **23.02.2022**

(51) International Patent Classification (IPC):
**H04W 64/00** (2009.01)          **G01S 5/00** (2006.01)
**G01S 5/02** (2010.01)          **H04W 8/00** (2009.01)
**H04W 76/14** (2018.01)

(52) Cooperative Patent Classification (CPC):
**H04W 64/00; G01S 5/0072; G01S 5/0236;
H04W 76/14**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Koninklijke Philips N.V.
5656 AG Eindhoven (NL)**

(72) Inventor: **The designation of the inventor has not
yet been filed**

(74) Representative: **Philips Intellectual Property &
Standards
High Tech Campus 52
5656 AG Eindhoven (NL)**

(54)    **ENHANCED RANGING AND POSITIONING SERVICES IN WIRELESS NETWORKS**

(57)    The invention relates to a wireless system and methods for configuring two or more ranging capable devices to form a ranging constellation to support ranging-based positioning services. Multiple challenges in improving location accuracy when using ranging measurements to derive the location coordinates are addressed. In particular, timing at which the location information can be derived from ranging measurements and methods used for ranging-based location estimation are described.

**Fig. 5**

**Description**

FIELD OF THE INVENTION

The invention relates to ranging and positioning services in wireless networks, such as - but not limited to - cellular networks, such as fifth generation (5G) or higher generation networks.

BACKGROUND OF THE INVENTION

Ranging is a process by which distance and/or angle between two wireless devices is measured as a function of radio parameters (e.g., signal quality, channel condition, round trip time etc.). In wireless systems, accuracy of ranging measurements may have direct correlation with at least one of link quality of a used radio channel, calibration of a used ranging procedure, and hardware capabilities of a used device in terms of antenna design, energy and compute resources. In addition, power consumption of the ranging procedure may have a direct correlation with frequency of operations, duty cycle, repetitions of messages from a device to a ranging service of another device. Due to this direct correlation with dynamic system parameters, accuracy and power consumption of ranging in wireless devices may become unpredictable and more often negatively impacted. Particularly in situations where ranging measurements are used to derive location coordinates (e.g., geographical coordinates) of a device, the accuracy of ranging service is vital in determining precise location coordinates.

Wireless standards offer standardized techniques to support peer-to-peer ranging, wherein requirements are set forth by multiple use cases, as described e.g. in 3GPP specification TR 22.855 "Study on Ranging-based Services". However, there are still open challenges in improving location services using specific ranging constellations.

SUMMARY OF THE INVENTION

It is an object of the present invention to provide improved ranging-based location estimation for deriving location information from ranging measurements.

This object is achieved by an apparatus as claimed in claim 1, by a mobile communication device or access device as claimed in claim 15, by a system as claimed in claim 17, by a method as claimed in claim 21, and by a computer program product as claimed in claim 22.

According to a first aspect, an apparatus is provided (e.g., at a mobile communication device or an access device) for obtaining a location estimate of a target mobile device within a wireless network, wherein the apparatus is adapted to:

> request a ranging service from a ranging constellation formed by one or more ranging capable anchor devices of the wireless network, wherein the ranging constellation acts as a proxy for a positioning service provided in a geographical area;
> receive at least one response message from the ranging constellation;
> perform a range or location estimate based on the at least one response message; and
> forward the range or location estimate to the ranging constellation to support the positioning service.

According to a second aspect, a mobile communication device or an access device comprising the apparatus of the first aspect is provided.

According to a third aspect, a system comprising at least one device of the second aspect is provided, wherein the positioning service is executed by a wireless access device or by a core network of the wireless network, and wherein anchor devices forming the ranging constellation and involved in the requested ranging service are configured to send and/or receive configuration parameters to and/or from the wireless access device or the core network.

According to a fourth aspect, a method of obtaining a location estimate of a target mobile device within a wireless network is provided, wherein the method comprises:

> requesting a ranging service from a ranging constellation formed by one or more ranging capable anchor devices of the wireless network;
> receiving at least one response message from the ranging constellation;
> performing a range or location estimate based on the at least one response message; and
> forwarding the range or location estimate to the ranging constellation to support a positioning service.

Finally, according to a fifth aspect, a computer program product is provided, which comprises code means for producing the steps of the above method according to the fourth aspect when run on a computer device.

Accordingly, a managing entity (e.g., wireless access device or base station or a network function in the core network) configures one or more network devices (e.g., UEs) as anchor devices to form a ranging constellation to support ranging services, location services and/or ranging-based positioning services (i.e., a combination of ranging and location service functionality). Thereby, location accuracy can be improved with simple ranging measurements between the devices, coordinated either locally or centrally. In addition to improving localization and ranging accuracy, the ranging constellation also helps to reduce power consumption of the involved (mobile) network devices by combining ranging and location services. In particular, the moment at which the location information can be derived from ranging measurements and the methods used for ranging-based location estimation can be determined.

The ranging services, location services and/or ranging-based positioning services could be offered by a different network other than the wireless network which collects the ranging measurements. It could also be a third-party application which calculates the position based on these measurements. Furthermore, the geographical area of the positioning service may depend on the capability of the anchor device(s) and/or the characteristics of the environment in which the anchor device(s) is/are configured. It does not have to be known by the network could in advance and could optionally by configurable.

According to a first option which can be combined with any of the above first to fifth aspects, the range or location estimate or ranging measurement may be performed based on discovery messages or carrier phase based ranging or positioning techniques. The discovery messages allow integrity protection, scrambling protection, and confidentiality protection and the used ranging application can be identified by using an identifier. The carrier phase based techniques allow a combination of calculation (from decoding a signal) and phase measurement leading to a higher accuracy in the ranging-based location estimation.

According to a second option which can be combined with the first option or any of the above first to fifth aspects, a positioning signal may be transmitted to the target mobile device or the anchor device by using a predefined carrier signal, carrier cycles of the carrier signal may be counted until a response from the target mobile device or the anchor device has been received, and a distance to the target mobile device or the anchor device may be determined based on the counted number of carrier cycles. Thus, a carrier signal of the positioning signal can be used directly for determining the distance to the target mobile device.

According to a third option which can be combined with the first or second option or any of the above first to fifth aspects, the apparatus of the second aspect may be adapted to initiate a self-configuration of a ranging capable anchor device. Thus, upon self-configuration as an anchor device, the target mobile device can directly start advertising discovery messages for range-based positioning as a proximity service.

According to a fourth option which can be combined with any of the first to third options or any of the above first to fifth aspects, a switch may be performed from determining location coordinates of the target mobile device by a location service to determining location coordinates by the ranging constellation based on ranging measurements.. Thereby, the ranging measurements are used to improve available location or ranging services provided by the network.

According to a fifth option which can be combined with any of the first to fourth options or any of the above first to fifth aspects, location coordinates of the target mobile device may be obtained from an anchor device of the ranging constellation, the location coordinates being determined by using a set of ranging measurements. Thus, the location coordinates can be directly obtained from the ranging constellation without any access to the core network of the wireless network.

According to a sixth option which can be combined with any of the first to fifth options or any of the above first to fifth aspects, ranging or sidelink-based positioning may be performed between the target mobile device and one or more anchor devices of the ranging constellation or between anchor devices of the ranging constellation. Thereby, sidelink resources can be used to perform ranging and the resultant measurements are leveraged to improve the accuracy of positioning services. Sidelink-based positioning is used to determine a position (e.g., by an anchor device or a ranging-based positioning service) based on ranging using sidelink resources.

According to a seventh option which can be combined with any of the first to sixth options or any of the above first to fifth aspects, wherein at least one may be performed of transmitting an identifier to the target mobile device or another ranging capable anchor device for use to retrieve location coordinates from a location service or database, and providing authorization credentials to the target mobile device (10) or the other anchor device (14), and providing an authorization message or credentials to the location service or database, and granting permission for the retrieval by providing consent in its subscription or by providing consent through a network exposure function. Thereby, location coordinates of the target mobile device or another ranging capable anchor device can be retrieved from a location service or database in a secure manner.

According to an eighth option which can be combined with any of the first to seventh options or any of the above first to fifth aspects, a number of anchor devices and/or a set of identifiers of the number of anchor devices and/or a constellation identifier may be indicated as part of at least one message to request the ranging session.. Thus, the ranging request can be used to provide information for allocating the ranging constellation.

According to a ninth option which can be combined with any of the first to eighth options or any of the above first to fifth aspects, a list of approved constellation identifiers and/or ranging capable anchor devices selectable for the ranging service may be provided.. Thus, access to the ranging constellation can be made more efficient.

According to a tenth option which can be combined with any of the first to ninth options or any of the above first to fifth aspects, at least one policy may be provided that specifies a minimum number of anchor devices and/or requirements on capabilities and/or characteristics of the anchor devices to determine whether to request the ranging service or to determine which constellation or set of ranging capable anchor devices to select/connect to for the ranging service. Thereby, formation and selection of a proper ranging constellation can be controlled via corresponding policies.

According to an eleventh option which can be combined with any of the first to tenth options or any of the above first to fifth aspects, the apparatus of the first aspect may be configured by a managing entity or may be adapted to configure itself to switch on a ranging service upon entering the geographical area or upon the target mobile device entering the geographical area. Thereby, access to the ranging service can be controlled based on a specific geographical area.

According to a twelfth option which can be combined with any of the first to eleventh options or any of the above first to fifth aspects, a signal quality or a result of a distance measurement may be used to determine that the target mobile device is sufficiently close and/or has a line of sight with at least one of the ranging capable anchor devices, in order to determine whether or not to initiate the ranging service. Thus, initiation of the ranging service can be controlled to make sure that the anchor devices of the ranging constellation are in an operation range.

According to a thirteenth option which can be combined with any of the first to twelfth options or any of the above first to fifth aspects, the range or location estimate or the ranging measurement may be compensated for a length, placement and/or directionality of at least one antenna used for performing ranging measurements. Thereby, measurement errors caused by antenna arrangements can be prevented or at least reduced.

According to a fourteenth option which can be combined with any of the first to thirteenth options or any of the above first to fifth aspects, a ranging request, a measurement result and/or a calculated distance and/or angle may be discarded and an error message may be generated or a configuration parameter may be updated, or an exception may be requested from a managing entity with higher priority, in response to a receipt of a configuration parameter or a desired parameter value to be used that conflicts with a configuration parameter received from the managing entity with the higher priority. Thereby, conflicts between management entities can be addressed.

According to a fifteenth option which can be combined with any of the first to fourteenth options or any of the above first to fifth aspects, the wireless access device or the core network may be configured to control at least two of the mobile communication devices to initiate a ranging session without a discovery phase, wherein the wireless access device or the core network may be configured to provide configuration parameters so that each of the at least two mobile communication devices knows how to perform the requested ranging service. Thus, a ranging session can be directly initiated in an efficient manner without prior discovery. According to a sixteenth option which can be combined with any of the first to fifteenth options or any of the above first to fifth aspects, the ranging capable anchor devices of the ranging constellation may be provided with a specific relay service code or service identifier that allows other ranging capable devices that are part of the ranging constellation and/or that are in a vicinity of the ranging constellation and/or that are capable and/or enabled and/or authorized for ranging and/or location services to access a location service and/or ranging service via a sidelink connection based on the specific relay service code or service identifier. Thereby, sidelink resources can be used to improve ranging and/or location services.

It is noted that the above apparatuses may be implemented based on discrete hardware circuitries with discrete hardware components, integrated chips, or arrangements of chip modules, or based on signal processing devices or chips controlled by software routines or programs stored in memories, written on a computer readable media, or downloaded from a network, such as the Internet.

It shall be understood that the apparatus of claim 1, the mobile communication device or access device, the system, the method of claim 15, and the computer program product may have similar and/or identical preferred embodiments, in particular, as defined in the dependent claims.

It shall be understood that a preferred embodiment of the invention can also be any combination of the dependent claims or above embodiments with the respective independent claim.

These and other aspects of the invention will be apparent from and elucidated with reference to the embodiments described hereinafter.

BRIEF DESCRIPTION OF THE DRAWINGS

In the following drawings:

Fig. 1 schematically shows different concepts of providing ranging services to mobile devices with or without network coverage;

Fig. 2 schematically shows an illustration of different directions in a spherical coordinate system;

Fig. 3 schematically shows a timing diagram for data transmission between a transmitter and a receiver to explain a round-trip-time concept;

Fig. 4 schematically shows an illustration of an angle-of-arrival concept based on a phase difference consideration;

Fig. 5 schematically shows a block diagram of a wireless system for providing ranging and/or positioning services according to various embodiments;

Fig. 6 schematically shows a network architecture where a mobile terminal approaches a constellation of mobile terminals to get assisted by ranging services for location coordinates according to various embodiments; and

Fig. 7 schematically shows a signaling and processing diagram for ranging-based positioning services according to various embodiments.

DETAILED DESCRIPTION OF EMBODIMENTS

Embodiments of the present invention are now described based on ranging and/or positioning (sometimes also called "localization") services for cellular networks, where e.g. 4G network elements may be incorporated in proposed 5G solutions. Furthermore, at least some of the below embodiments are described based on a 5G New Radio (5G NR) radio access technology.

Throughout the present disclosure, the term "wireless network" is intended to mean a whole network system (e.g., 4G or 5G system) including communication devices (e.g., UEs) radio access network (RAN) and core network (CN). Furthermore, the abbreviations "eNB" (4G terminology) and "gNB" (5G terminology) are intended to mean access device such as a cellular base station or a WiFi access point. The eNB/gNB is part of the RAN, which provides an interface to functions in the CN. The RAN is part of a wireless communication network. It implements a radio access technology (RAT). Conceptually, it resides between a communication device such as a mobile phone, a computer, or any remotely controlled machine and provides connection with its CN. The CN is the communication network's core part, which offers numerous services to customers who are interconnected via the RAN. More specifically, it directs communication streams over the communication network and possibly other networks. In the 3GPP specifications 23.303, 23.304, 24.334 and 24.554 for 4G and 5G networks, respectively, so-called proximity service (ProSe) functions are defined to enable - amongst others - connectivity for cellular communication devices (e.g., UEs) that are temporarily not in coverage of an access device (eNB). This particular function is called ProSe UE-to-network relay, or Relay UE. The Relay UE is a communication device that helps another out-of-coverage (OoC) UE to communicate to the eNB (i.e., access device) by relaying application and network data traffic in two directions between the OoC UE and the eNB. The local communication between the Relay UE and the OoC-UE is called D2D communication or Sidelink communication or PC5 communication. The abbreviation "PC5" designates an interface for sidelink communication as defined by ProSe. Furthermore, the abbreviation "UL" is used for the uplink direction from the communication device (e.g., UE) to the access device (e.g. eNB, gNB), the abbreviation "DL" for the downlink direction from the access device (e.g. eNB, gNB) to the communication device (e.g. UE), and the abbreviation "SL" for sidelink communication between two or more communication devices (e.g. UEs).

Once a relaying relation is established, the OoC-UE is connected via the Relay UE and acts in a role of "Remote UE". This situation means the Remote UE has an indirect network connection to the CN as opposed to a direct network connection that is the normal case (cf. 3GPP specification TS 22.261 v16.10.0).

Furthermore, 3GPP specifications TR 23.733 v15.1.0 and TR 36.746 v15.1.1 provide studies on architectural enhancements e.g. to enable an IoT device (in a role of Remote UE) to operate on very low power by using a Relay UE to connect to the wider network. Because the Relay UE is physically very close, it can be reached using very low power transmissions. This work also includes security, speed and stability improvements to ProSe. These extensions of ProSe are called enhanced ProSe ("eProSe").

ProSe can also be used for direct communication between two UEs. Additional radio level details on ProSe, V2X and sidelink communication can be found in 3GPP specifications TR 37.985, TS 38.300 and TR 38.836.

Ranging can be defined as a process which measures a distance and/or relative directional angle between two wireless devices in a 3-dimensional space. In the initially mentioned specification TR 22.855 "Study on Ranging-based Services", ranging-based services are defined as applications utilizing the distance between two UEs and/or the direction of one UE from the other. These ranging-based services are envisioned to be supported with or without network coverage. Next to the measurement of the distance and directional angle, a relevant measurement is whether two wireless devices are in direct Line-of-Sight or not since this is relevant for many use cases in which UEs are supposed to interact with each other if they are in Line-of-Sight, e.g., in the same room.

The term "ranging reference signals" is used herein to denote signals used for determining the distance and/or angle between two devices that may be connected through a device-to-device connection (e.g., using sidelink and/or PC5) rather than an infrastructure connection (e.g., using Uu interface). The ranging reference signals may be position reference signals and/or sounding reference signals or other signals (e.g., signals used for round-trip time (RTT) measurements) that may be used for determining distance and/or angle between the devices, possibly using resources (that may be configured or granted by an access device) for device-to-device (e.g., sidelink) communication/discovery and/or resources specifically reserved for sending the reference signals or the other signals that may be used for determining distance and/or angle between the devices.

Not every device is capable of calculating the angle, since it requires multiple antennas. The ranging capabilities of the device (which can be exchanged as part of the discovery process) can be used to determine what a device is capable of and which measurements can be made. Note that angle calculation may need to be an explicit capability rather than based solely on a capability declaring the number of antennas. The number of antennas alone being bigger than one does not automatically imply that the device is capable of calculating an angle. The calculation of the angle may further require a sensor (e.g., magnetometer, gyroscope, accelerometer) to derive an orientation and/or angle towards a reference point, such as the magnetic north, and an angle/orientation calibration mechanism. The angle may also indicate a difference in height, and may use a reference height (e.g., meters above sealevel and/or barometric pressure, floor information, terrain height data for the device position), and a height calibration mechanism.

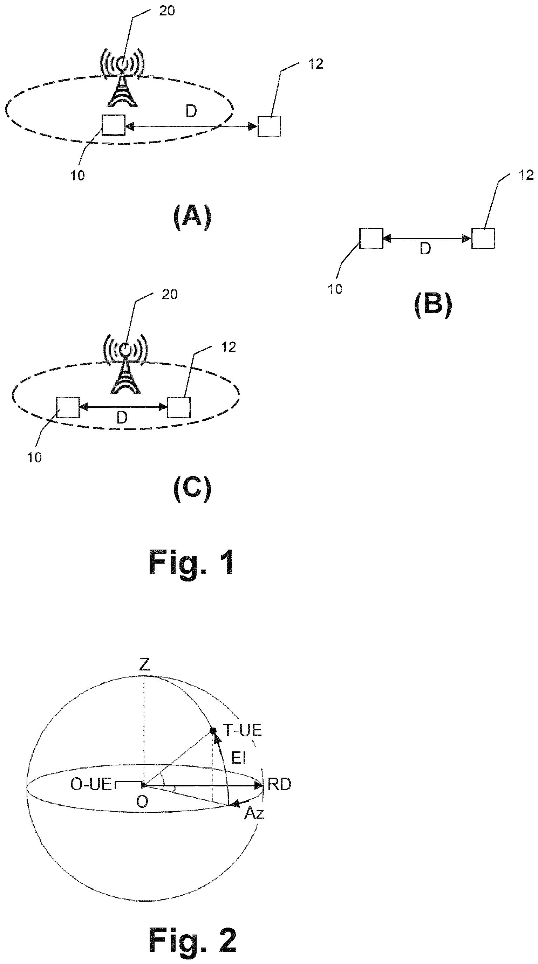

Figs. 1A-C schematically shows different concepts of providing ranging services based on distance and/or direction (D) between two mobile devices 10, 12 with or without network coverage. The dotted elliptical line shows a perspective view of a circular coverage area around an access device (e.g., gNB) for accessing a 5G cellular network.

In Fig. 1A, a first UE 10 is located within the coverage area of the access device 20, while the second UE 12 is located outside of the coverage area and thus has no network coverage.

In Fig. 1B, both first and second UEs 10, 12 have no network coverage.

In Fig. 2C, both first and second UEs 10, 12 are located within the coverage area of the access device 20 and thus have network coverage.

Fig. 2 schematically shows an illustration of different directions in a spherical coordinate system.

The distance and angle between a set of UEs (e.g., an observer UE (O-UE) and a target UE (T-UE)) can be visualized in a 3-dimensional (3D) sphere in a 2-dimensional (2D) plane as shown in Fig. 2. The horizontal direction (i.e., the azimuth (Az)) of the target UE is the angle formed between a reference direction (RD) and a line from the observer UE to the target UE projected on the same plane as a target reference direction orthogonal to the direction of the zenith (Z). The elevation angle (i.e., the elevation (El)) of the target UE is an angle above the horizontal plane, i.e., formed between the horizontal target reference direction and the direction from the origin of the observer UE to the target UE.

A ranging measurement between two UEs as described e.g. in a ranging study by Mario H. Castañeda Garcia et al.: "A Tutorial on 5G NR V2X Communications" (DOI 10.1109/COMST.2021.3057017) may result in two parameters, which are the distance between the two UEs in meters and an angle in degrees at which the target UE is elevated in a 3D plane from the observer UE.

There are multiple use cases which require a distance accuracy within 10cm (i.e., sub-nanosecond range of time measurement accuracy) in an effective ranging distance of 20m and a tolerance of up to $\pm2°$ in horizontal and vertical planes in a coverage range of - 45° to +45° angle of arrival (AoA) with respect to a reference direction of the ranging device. In some use cases a local coordinate system is proposed for ranging UEs, in which the distance and angles measured from the ranging services are translated to location coordinates. The UEs involved in ranging are expected to move at various speeds (e.g., from 1m/s to 10 m/s) and multiple concurrent ranging operations between multiple UEs can be done in a given area and a UE can carry out multiple concurrent ranging operation with other UEs present in the area.

A so-called "peer-to-peer ranging" can be done in many ways including but not limited to:

  i. Two-way ranging, which is a process where two devices A and B communicate a data packet and an acknowledgement packet back and forth with themselves. The time delay occurring due to natural radio signal propagation and due to processing delay on the device B (i.e., time taken by the device B to resend a packet to device A) is taken into consideration in this technique. The one-way time of flight is then calculated on device A as the half of the difference between a) the time spent by the device A between transmitting a packet and receiving the next packet from B and b) the time spent by the device B between receiving a packet from A and transmitting the response packet back to A. Device B may include information in its response packet such that A can calculate the time spent of B. Then at device A, the one-way time of flight may be used to calculate the distance between two devices A and B. Device B may perform the same procedure with device A such that B can also calculate this distance. The two devices' clocks need not be synchronized with each other in this technique since the processing delay is accounted for with two consecutive packet transmissions and distance may be calculated simultaneously in both devices.

  ii. One way ranging, which is a process, where at least one packet is transmitted between the transmitting wireless device A and a receiving wireless device B. These devices are synchronized with each other by a common clock source. The time of flight is then measured as the difference between the time of reception at the device B and the time of transmission at the device A. Device A may include a timestamp of its time of transmission within the data packet, so that device B can calculate this time difference. The accuracy of ranging depends on the accuracy of clock synchronization achievable between the two devices.

The peer-to-peer ranging operation may depend on multiple parameters of wireless communication such as clock time synchronization between the devices, communication path (e.g., line of sight (LOS) or non-line of sight (NLOS)) over which the signal is transmitted, antenna properties, frequency of operation, transmission power and receiver sensitivity of the wireless radios. These parameters are also important for radio communication in general, resulting in multitude of standardized techniques to achieve highest communication performance for a given radio. For example, in 3GPP the sidelink radio resource protocol as described in specification 36.331 v16.4.1 ensures clock time synchronization with high accuracy between two sidelink UEs operating in multiple in-coverage and out-of-coverage scenarios.

Positioning can be defined as a process of determining, according to a location coordinate system, location coordinates of wireless devices such as but not limited to mobile phone, wearables, and IoT devices. Upon determining of the location coordinates of a device, it can be located on a map using a mapping function. Positioning is typically distinguished between absolute positioning (i.e., determine geographical coordinates (location coordinates) according to a standardized geographic coordinate system), or relative positioning (i.e., determine coordinates (e.g., using a local coordinate system) and/or angle plus distance relative to a reference point). Some examples of how absolute positions or relative positions can be expressed can be found in 3GPP specification TS 23.032. A classic example is a satellite-based location service (e.g., Global Positioning System (GPS) or Global Navigation Satellite System (GNSS)), where a device's location coordinates are calculated using at least three of the many satellites belonging to a constellation of medium earth orbit (MEO) satellites using well known processes such as triangulation and trilateration, where the satellites act as the clock synchronization source and communication delay of the transmitted packets are used to estimate the location coordinates. These coordinates can be used by any third-party mapping tool (e.g., OpenStreetMap) to pinpoint the location of a device in a geographical map of the area. Also, several indoor positioning techniques based on radio frequency technologies such as Bluetooth, UltraWideBand (UWB), or Wi-Fi are available, which can locate/determine the coordinates of a radio frequency (RF) emitting tag in an indoor environment. The position of these tags may then be mapped onto an indoor floor plan using the indoor coordinates estimated based on the RF propagation properties such as time delay, multipath reflections, received signal strength, etc., measured using RF communication between the tags and anchor nodes that are placed in pre-known locations of the building.

Positioning techniques used for obtaining a coordinate of a device's current location can be accomplished in several ways, but typically includes triangulation and/or trilateration based on a set of measured distances and/or angles between the device and a set of other devices or reference points. Distances and angles can be determined using various techniques which may include round trip time (RTT), time of flight (ToF), time difference of arrival (TDoA), angle of arrival/departure (AoA/AoD) and/or a combination thereof:

The round trip time (RTT) defines a duration from when a data packet transmitted by a transmitter (Tx, e.g., an access point/device) to when the same data packet is received and acknowledged by a receiver (Rx, e.g., a mobile phone/device), i.e., up to the moment the transmitter receives the acknowledgement. Since the data packet travels at the speed of light in air medium (approximately 3.3 ns/m), the time duration the data packet travels in air is proportional to the actual distance between the Tx and the Rx. In scenarios, where the internal clocks in the Tx and the Rx are not synchronized, a one-way time measurement cannot be based on differences between time stamps of transmission and reception, since it will also include the timing errors caused by, among others, internal clock drifts and indeterministic clock offsets between Tx and Rx. Since the internal clocks of Tx and Rx are not synchronized, the difference in time stamps when the signal travels in the reverse direction (i.e., Rx to Tx) is affected in the opposite way by the clock offset as in the forward direction (i.e., Tx to Rx).

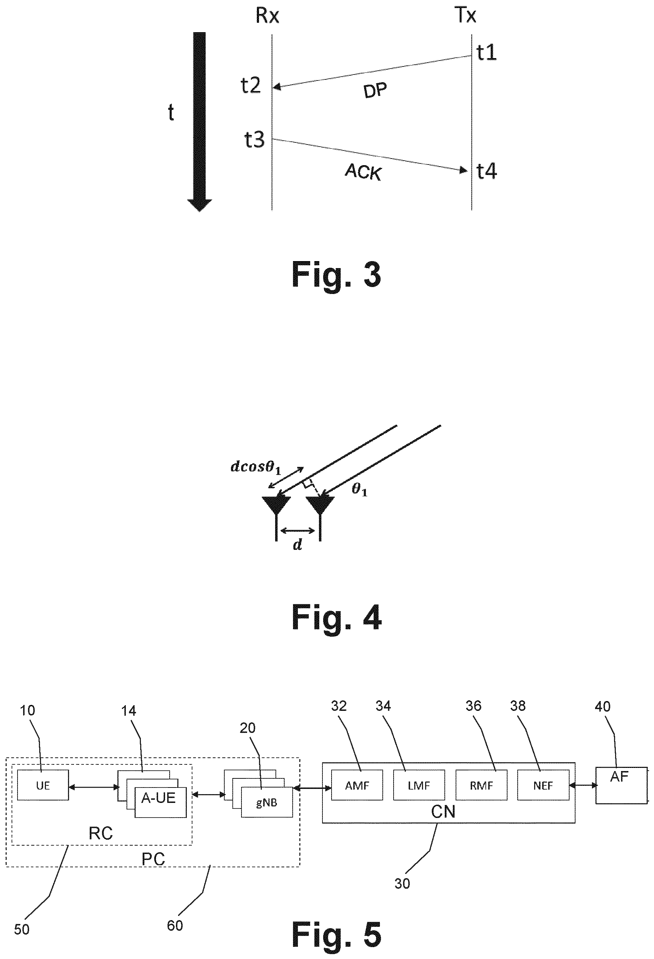

Fig. 3 schematically shows a timing diagram for data transmission between a transmitter and a receiver to explain the round-trip-time concept.

In the timing diagram of Fig. 3, the time passes from the upper side to the lower side while information flow between a transmitter (Tx) and a receiver (Rx) is indicated by respective arrows.

According to Fig. 3, a data packet (DP) is transmitted at time t1 from the Tx to the Rx and received at the Rx at time t2. An acknowledgement (ACK) is transmitted at time t3 from the Rx to the Tx and received at the Tx at time t4.

The round trip time (RTT) can be obtained without having to know any clock offsets by simple addition and subtraction of the four time stamps t1 to t4, as follows:

$$RTT = (t4\text{-}t1 + t2\text{-}t3)$$

where t1 is the time of transmission, t2 is the time of reception, t3 is the time of acknowledgement transmission and t4 is the time of acknowledgement reception.

The distance D between the Tx and the Rx can be estimated by using the following equation:

$$2 * D = ((t4\text{-}t1) - (t3\text{-}t2)) * c$$

where, c is the speed of light. Also note that in RTT measurements-based distance estimation there is no need of synchronization between the transmitter and receiver. The calculation of a single distance can be extended to two- and three-dimensional spaces for estimation of multiple distances, which can then be translated to estimates of location coordinates (both local and global) when the coordinates of each transmitter are known in advance. Some standardized mechanisms using an RTT based technique include Fine Timing Measurement (FTM) as defined in IEEE 802.11-2016, and Enhanced Cell-ID (E-CID) as defined in 3GPP TS 36.133.

The time of flight (ToF) corresponds to a duration from when a data packet transmitted by a transmitter (Tx, e.g., access point/device) to when the same data packet is received by a receiver (Rx, e.g., a mobile phone/device). Note that this method takes only the forward path (i.e., Tx to Rx) into account and does not account for the reverse path (i.e., Rx to Tx). In this case, internal clocks of the Tx and the Rx (or multiple Tx and Rx) need to be timesynchronized such that the time stamp of the received packet can be assumed to be correct and compensated for any timing error caused by among others internal clock drifts and indeterministic clock offsets between Tx and Rx. Assuming the Tx and the Rx of Fig. 3 are synchronized, the distance D between the Tx and the Rx can be calculated by the following equation:

$$D = (t2\text{-}t1) * c$$

where, t2 is the time stamp of the reception and t1 is the time stamp of the transmission, and c is the speed of light. The time of flight can be calculated by Rx knowing the time stamp t1 (which was e.g. included in the transmitted message or communicated later) and by its own measured time stamp t2. The time of flight can also be calculated by Tx knowing the time stamp t2 (which was e.g. communicated later by Rx to Tx) and its own measured time stamp t1. The calculation of a single distance can be extended to two- and three-dimensional spaces for estimation of multiple distances, which can then be translated to estimates of location coordinates (both local and global) when the coordinates of multiple reference devices (either acting as the transmitter or the receiver) are known in advance.

The time difference of arrival corresponds to a difference in time stamps at which a data packet is received by a number of clock-synchronized receivers (Rx, e.g., access points/devices which are synchronous location reference stations), whereby the data packet was transmitted by an asynchronous transmitter (Tx, e.g., a mobile phone/device, or asynchronous location tag for which the location coordinates are to be determined). Note that the roles can be the other way around, e.g., the mobile phone/device may be an asynchronous Rx and the access points/devices may be synchronized transmitters. Note that a single transmission of a data packet by the transmitter will be received concurrently by several synchronized receivers placed within a coverage area of the transmitter. It is important that the receivers are clock-synchronized and that the location coordinates of the receivers are known to a central location server, whereas the transmitter for which the location coordinates are to be determined may not be synchronized either with other transmitters or with the receivers. A central location server can receive the time of arrival of the data packet from each receiver i = 0 ... N and may compute the distance difference for any pair of receivers (i, j) for a specific transmitter based on the following equation:

$$\Delta d_{ij} = (d_i - d_j) = \Delta t_{ij} * c$$

where, c is the speed of light and $\Delta t_{ij}$ is the difference in arrival times between receiver i and receiver j, $d_i$ is the unknown Tx-to-Rx distance for a receiver i, $\Delta d_{ij}$ is the difference in Tx-to-Rx distances between a receiver i and a receiver j. The calculation can be applied to two- and three-dimensional spaces for estimation of distance differences, which can be translated to location coordinates (both local and global) when the coordinates of the receivers are known in advance. Note that the transmitters are not able to calculate its own location locally on the device and only the location server can calculate the location of a transmitter using a localization infrastructure and a network of synchronized receiver nodes. Note that the location server may be located on one of the clock-synchronized receivers. The location of the transmitter can be communicated (e.g. to an application, to the transmitter, or to one or more receivers) via a separate communication channel or can be amended in one of the responses from the receivers to the transmitter in the same channel used for transmitting the data packet.

Alternatively or additionally, the receiver may send its measurements (e.g., time of arrival information) rather than a calculated distance and/or angle to the transmitter or a location server that will calculate the resulting distance and/or determine the resulting location coordinates. Some standardized mechanisms using a ToF difference based technique include Observed Time Difference of Arrival (OTDOA) as defined in 3GPP TS 25.305 and TS 36.133, and Uplink Time Difference of Arrival (UTDOA) as defined in 3GPP TS 25.305, typically based on a position reference signal (PRS) or sounding reference signal (SRS).

In addition to the time-based distance estimation, the angle of arrival is derived from phase information of an RF signal received at a receiver using an antenna array, which can be used to estimate at least one of the elevation angle and the azimuth angle at which the signal was received. This angle information can be used to determine the direction from which a signal was transmitted.

Fig. 4 schematically shows an illustration of an angle-of-arrival concept based on a phase difference consideration.

In the example of Fig. 4, the angle of arrival of the incoming RF signal (shown by two oblique arrows) can be calculated as follows. In principle, a receiver with at least two antennas with different phase of reception $\varphi1$, $\varphi2$, separated by a distance d, can determine the phase difference $\Delta\varphi$ of the received signal at the receiver and then use it to estimate the angle of arrival based on the following equation:

$$\Delta\varphi = [\varphi1 - \varphi2] = 2\pi\,[(d\cos\theta_1)/\lambda] + 2k\pi$$

where, $\theta_1$ is the angle of arrival to be estimated, k is the wave number which can be calculated by $k=2\pi\lambda$, where $\lambda$ is the wavelength of the RF signal calculated by $\lambda =c/f$, where c is the speed of light and f is the radio frequency of the signal.

The angle of arrival of the RF signal at the receiver can be estimated using a naive approach based on the measured phase difference using the following equation:

$$\cos\theta_1 = [(\Delta\varphi/2\pi) - k] * [\lambda/d]$$

Note that in addition to the approach described above, there are several well-known approaches available to calculate the angle of arrival of an RF signal including but not limited to Bartlett beamforming (cf. M. S. Bartlett: "Smoothing Periodograms from Time-Series with Continuous Spectra*")*, Multiple Signal Classification (MUSIC) (cf. https://en.wikipedia.org/wiki/MUSIC (algorithm)), distortion estimation (cf. J.Capon: "Highresolution frequency-wavenumber spectrum analysis", Proceedings of IEEE, Vol. 57, issue 8), and signal and noise subspace estimation. Other complex estimation of AoA may use more than two antennas at the receiver, which enables only one receiver instead of three synchronous receivers to obtain both angle and distance measurements based on a RF signal transmitted by an asynchronous transmitter with a rather simple hardware and single antenna. Similarly, the angle of departure (of the signal at the transmitter) can be determined and used for ranging/position estimation in case the transmitter uses multiple antennas.

The process of obtaining location coordinates of a device and using a mapping function to locate the device on a map is also offered by location services (LCS) provided in 3GPP systems, where a base station may act as a synchronization source and location coordinates of the devices are obtained based on radio parameters and special messages using a variety of positioning methodologies as described e.g. in 3GPP specification TS 23.271 "Functional stage 2 description of Location Services (LCS)*"*, Rel-16, for 4G, and 3GPP specification TS 23.273 "5G System (5GS) Location Services (LCS); Stage 2", Rel-17, for 5G.

A typical difference between the location service and ranging service offered by the 3GPP system is that the location service may measure geographical coordinates of a device within the coverage area of a cell (e.g., 1-5km) and provides good accuracy in outdoor environments where line of sight (LOS) is possible with the base station and the communication path can be fairly modelled and accounted for using channel models of urban and rural environments, whereas the ranging service may measure a distance and/or angle between two devices within a short range (e.g., 20m) and provides good accuracy in outdoor and especially indoor environments where two ranging devices can also be in line of sight (LOS) with each other.

The functionality of the location service and ranging service may be combined to offer e.g. a location service with improved accuracy and better indoor position estimation.

Note that a location service may also offer ranging services, e.g. in case the location of two devices can be observed/determined for example through GNSS, the distance and/or angle between the two devices can be calculated and may be exposed as part of a ranging service that may allow a device to request its distance and/or angle between itself and another device. In such case, the two devices may still be requested to perform ranging measurements between each other to improve the accuracy of the distance and/or angle between the two devices or for determining deviations to the observed/determined location.

A translation of distance to coordinates can be achieved e.g. based on ranging measurements by which a first device A can obtain a distance (d) and the angle (tc) towards a second device B. If the coordinates of the device A are known, and its orientation with respect to the coordinate system is known, the distance and angle measurements between the device A and the device B can be used by the device A to obtain the coordinates of the device B.

For example, in case of geographical coordinates expressed in radians, the latitude (lat1) and longitude (lon1) of the device A are assumed to be known. Then, the geographical coordinates (lat2, lon2) of the device B can be calculated using the following equations when using a spherical-Earth approximation model:

$$lat2 = asin(sin(lat1)*cos(d)+cos(lat1)*sin(d)*cos(tc))$$

$$dlon=atan2([sin(tc)*sin(d)*cos(lat1)], [cos(d)-sin(lat1)*sin(lat2)])$$

$$lon2=[mod(lon1-dlon+\pi, 2*\pi)]-\pi$$

Here the distance d is expressed as a relative distance equal to the distance measured between A and B divided by the average radius of Earth.

As another example, in case of a local 2D Cartesian coordinate system used for an area the X and Y coordinate of the device A (x1 and y1 respectively) may be assumed to be known. Then, the X/Y location coordinates of the device B (x2 and y2 respectively) can be calculated using the following equations:

$$x2 = d * cos(alpha) + x1$$

$$y2 = d * sin(alpha) + y1$$

where all coordinates and distance d are expressed in meters and the angle (alpha) towards device B was measured by A.

Alternatively, translation of distance to coordinates of a coordinate system may be done using other concepts, such as reverse Havershine formula, length of degree, Molodensky's method and block shift method, depending on the required accuracy and the type of coordinate systems used by the application.

Current techniques for ranging and position estimation can be improved in the following areas:

i. Location accuracy is highly dependent on signal path loss and degrades with loss of signal quality in indoor and deep indoor environments, where cellular coverage is very poor. Moreover, in remote outdoor environments, where the number of base stations is limited and results in a sparse to no signal coverage, the accuracy of location services becomes poor. In such areas, depending on the positioning methods used, trilateration or triangulation of a mobile device (e.g., UE) may require a longer initial latching time to be able to simultaneously receive at least three different signals from at least three different base stations. If the mobile device is moving in such poor coverage areas, continuity and reliability of location services offered by base stations may become severely disrupted, resulting in a service that becomes non-usable for real time location tracking.

ii. Ranging accuracy in outdoor environments depends largely on channel variability and reflective properties of objects surrounding the devices that carry out ranging operations. In indoor environments, a user of a mobile device (e.g., UE) can fairly control the environment with respect to objects and surrounding environment prior to ranging between two devices, whereas in outdoor environments it is uncertain to have control over the environment and more often it will negatively impact ranging accuracy. In addition, the movements of mobile devices in outdoor environments may also have a large impact on ranging accuracy due to the probable Doppler effect in the RF propagation channel. Ranging measurements between two devices in an outdoor environment may thus become non-usable due to largely deteriorating effects in the RF channel.

In the following, embodiments are described, in which ranging and/or positioning concepts are complemented by using ranging measurements (e.g., distance, angle and altitude) between transmitters and receivers to thereby improve accuracy of positioning and/or reduce power consumption pertaining to these concepts.

Some use cases may require translation of ranging measurements into location coordinates, which enables UEs that are not capable of using a positioning service or an additional positioning module to get a location coordinate derived from ranging information. In addition, devices with very poor positioning accuracy especially in indoor environments may benefit from ranging, such that the positioning accuracy is increased from hundreds of meters to sub-meter accuracy in indoor and/or out of coverage environments. Moreover, accurate positioning and continuous tracking of low power IoT devices is a requirement for yet another use case, which can enable adaptive delivery of quality of service (QoS), e.g., high bandwidth is offered at a location X, whereas only low bandwidth is offered in location Y, to a mobile UE depending on the location. Some of the identified suitable use cases may require formation of a cluster of UEs based on location information to deliver location based QoS to a group of UEs.

It is important to note that throughout this disclosure, at places where a ranging and/or positioning concept is mentioned, either one of the above ranging and/or positioning methods or combinations thereof, or other ranging or positioning methods known to the skilled person can be used.

Fig. 5 schematically shows a block diagram of a wireless system for providing ranging and/or positioning services according to various embodiments.

A ranging constellation (RC) 50 is a group of one or more anchor UEs (A-UE) 14 adapted/prepared to let one or more device UEs 10 join that group. A device UE 10 may join the ranging constellation 50, e.g., for the purpose of initiating a ranging procedure or to participate in ranging of other UEs by acting as an additional anchor UE 14. In order to determine the (absolute or relative) location of a UE, a single distance and/or angle resulting from a ranging procedure may not be sufficient.

In an example, the ranging constellation 50 may have at least two or more anchor UEs 14 in order to determine a location of the device UE 10. The devices constituting the ranging constellation 50 may be selected based on a set of one or more selection criteria for a candidate device, such as its support for GPS/GNSS, whether or not its position is known, its particular ranging capabilities, its existing membership of other ranging constellation(s), its distance to a particular reference point (e.g., a nearby access device), its velocity and/or determination of whether the device is stationary or mobile, or whether or not such candidate device is within sidelink discovery range of another device (e.g., an anchor device). The formation of a ranging constellation and selection of its members is typically done by a managing entity but may also be self-configured based on the selection criteria.

A device UE 10 may be added to or removed from an existing ranging constellation. Similarly, an anchor UE 14 may be added to or removed from an existing ranging constellation. The ranging constellation 50 may be given an identity (e.g., by a managing entity), and this identity may be transmitted to each device joining/constituting the ranging constellation 50. The identity may also be used during discovery of ranging capable devices and/or during connection setup between ranging capable devices and/or exchanging messages to initiate a ranging session. Multiple identities may be assigned to the ranging constellation (e.g., both a unique constellation instance identifier and a constellation type identifier).

The device UE 10 corresponds to a wireless device that requires ranging and/or positioning services. It is noted that in the following description of embodiments, the term "device UE" and "UE" are used interchangeably and are intended to mean the same device.

Each anchor UE 14 corresponds to a wireless device that offers ranging and/or positioning signals to the UE 10. Additionally, the anchor UEs 14 may offer ranging/positioning services to UEs and other anchor UEs.

It is noted that the device UE 10 and the anchor UEs 14 may be a mobile phone or any type of connected device and can support Uu and PC5 3GPP interfaces. These devices may be capable of supporting multiple radio access technologies including but not limited to 2G/3G/4G/5G networks as described by 3GPP, non-3GPP wireless technologies operating in an unlicensed wireless spectrum such as the Wi-Fi spectrum, the Bluetooth spectrum, and ISM bands. The mobility of the device UE 10 and the anchor UE 14 does not affect the capability of a device UE 10 to become an anchor UE 14 or vice versa. Depending on the application, the anchor UE 14 can also be a fixed device (e.g., smart television) and a mobile device UE 10 (e.g., mobile phone) may even be authorized to become an anchor UE 14 either when it is moving or when it becomes and remains fixed in one location.

Both the device UE 10 and the anchor UE 14 may have a receiver unit for receiving position reference signals and/or other wireless signals used for distance/angle measurement and which may be able to determine the timing of these signals, and may have a computational unit for calculating distance/angle/positioning measurements (e.g., reference signal time difference (RSTD), reference signal received power (RSRP), Rx-Tx time differences between a device UE 10 and an anchor UE 14 and/or a device UE 10 and a wireless access device (e.g., base station or gNB) 20). In addition, the device UE 10 and the anchor UE 14 may have a transmitter unit for transmitting signals used for distance/angle measurement (e.g., position reference signals or sounding reference signals) and which may be able to determine the timing of these signals. An anchor UE may have a known/fixed position, and hence may be a Position Reference Unit as described in 3GPP document R2-2109489 and may transmit this information to device UEs 10 and/or other anchor UEs 14. The device UE 10 and anchor UE 14 may support transmission of signals and receiving signals to enable communication with a wireless access device (e.g., as defined in 3GPP specification TS 38.300) and may be able to communicate with a (cellular) core network and its services (e.g., as defined in 3GPP specification TS 23.501), such as a location service (e.g., as defined in 3GPP specification TS 23.273) using protocols such as LTE Positioning Protocol (LPP) as defined in 3GPP specification TS 36.355. Furthermore, the device UE 10 and anchor UE 14 may support discovery and communication over PC5/sidelink (e.g., as defined in 3GPP specifications TS 38.300, TS 23.287, TS 23.304 and TR 37.985) with another device UE and/or anchor UE.

The device UE 10, the anchor UE(s) 14 and the wireless access device 20 may together form a positioning constellation (PC) 60.

Ranging or sidelink-based positioning might be done between the device UE 10 and one or more anchor UEs 14 depending on the application and accuracy needs. For instance, a simple application such as rough ranging may be used by a single anchor UE 14 to provide an indication of a rough range/area. Other applications may require three or more anchor UEs 14 tightly clock-synchronized with the device UE 10.

The ranging constellation 50 comprises a set of UEs, e.g., the device UE 10 and at least one anchor UE 14 that performs ranging and supports each other in the provisioning of relative positioning services. In the ranging constellation 50, one of the anchor UEs 14 may be the head or lead anchor UE in charge of managing the remaining set of anchor UEs 14. Additionally, a configuring anchor UE may be configured to select, configure, reconfigure etc. anchor UEs 14.

At least one wireless access device 20 (e.g., base station or gNB) is configured to handle the connectivity of at least one UE. It also supports a number of positioning techniques either in an isolated manner or in combination with other wireless access devices 20. The wireless access device 20 is responsible for among others, radio resource allocation and scheduling, clock time synchronization and power control of connected devices.

The wireless access device 20 may also provide positioning signals and may provide (access to) positioning services for the devices in the ranging constellation 50. A positioning constellation 60 comprises a set of at least one wireless access device 20 that provides positioning services to at least one device UE 10 or anchor UE 14.

Furthermore, a core network (CN) 30 provides networking functions that control the access network and manage the UE devices 10 and anchor UEs 14 subscribed to core network services and served by means of the access network. It may be, e.g., a 5G core network. The core network 30 can include a number of network functions including an access and mobility management function (AMF) 32 configured to manage access and mobility of subscribed UEs, a location management function (LMF) 34 configured to manage positioning services offered to UEs 10 and anchor UEs 14, a ranging management function (RMF) 36 configured to manage ranging services between (ranging) UEs 10 and anchor UEs 14, and a network exposure function (NEF) 38 that allows an application function (AF) 40 to connect to the core network 30.

It is noted that a network controller device may perform the role of the core network 30 in the described embodiments.

The application function 40 may be a third-party application that may be interested in leveraging the services provided by the core network 30 and the wireless connectivity offered to UEs 10 and/or anchor UEs 14.

According to various embodiments, a managing entity is provided that configures one or more UEs as anchor UEs 14 to form the ranging constellation 50 and support ranging services, location services and/or ranging-based positioning services (i.e., a combination of ranging and location service functionality). In addition to improving localization and ranging accuracy, the ranging constellation 50 also helps to reduce power consumption at least for the involved UEs 10 by combining ranging and location services.

More specifically, location accuracy can be improved with simple ranging measurements between the devices, initiated and/or coordinated either locally or centrally. In examples, this can be realized by using ProSe discovery messages and/or carrier phase based ranging/positioning techniques and/or ranging/positioning signals transmitted combining FR1 (e.g., low/mid bands, typically up to 7.125 GHz) and FR2 frequency ranges (e.g., mmWave bands, typically above 24 GHz).

The core network 30 (e.g., network controller device), together with the wireless access device 20 (e.g., base station or gNB), may support ranging and/or positioning services needed by one or more device UEs 10 and offered by one or more anchor UEs 14 via the managing entity. A managing entity may be:

- a function offered by an anchor UE 14 through which a user can manually manage and/or through which a network entity (e.g. location service to which the anchor UE is communicatively coupled) can remotely manage the ranging and/or location procedures and/or service (such as configuring the requirements and parameters of the ranging procedures/service and/or location procedures/service including but not limited to which ranging/positioning method to use (e.g. RTT based, TDOA based, AoA/AoD based), which Radio Access Technologies to use (e.g. 3GPP LTE, 3GPP 5G NR, Wi-Fi, Bluetooth, UWB, ...), which bands to use (incl. whether unlicensed/licensed spectrum is to be used), which bandwidth to use, measurement duration, transmit power, accuracy of ranging, constellation size (e.g. number of devices, identities of the involved devices, area information, maximum distance), constellation configuration (e.g. known positions and/or initial position estimation of one or more devices constituting the constellation and/or estimated distance/angles), area map, coordinate system to be used (incl. which device or anchor point is used as the primary reference point/center), sampling frequency of ranging and positioning measurements);
- a user or an application communicatively coupled to the core network 30 (e.g., network controller device) via e.g. the network exposure function 38, and/or the location management function 34, and/or the ranging management function 36 through which the ranging and/or location procedures/service can be managed (such as configuring the requirements and parameters of the ranging procedures/service and/or location procedures/service);
- a selected one of the wireless access device 20 and/or the core network 30 (e.g., network controller device) that can (automatically) manage the ranging and location services, e.g., after being configured by the location management function 34, and/or the ranging management function 36; or

- the location management function 34 and/or the ranging management function 36 inside or outside of the core network 30, which may manage the ranging and/or location procedures/service (such as configuring the requirements and parameters of the ranging procedures/service and/or location procedures/service and/or configuring a ranging constellation) based on operator managed default operation settings, policies, location databases, historical measurement data, Artificial Intelligence model, possibly in cooperation with core network functions such as Network Data And Analytics Function (NWDAF, e.g. to determine density of devices, how many devices are typically registered at a certain time of day etc.), and User Data Management (UDM, e.g. for subscription related data).

The location management function and/or ranging management function may configure the (managing entity of) one or more device UEs 10 and/or one or more anchor UEs 14 and/or wireless access devices 20 based on the requirements and parameters of the ranging and/or location service (e.g., that have been provided through the network exposure function). The configuration may be done by sending a secure message via the PCF or AMF to the respective device UEs 10 and/or anchor UEs 14 and/or access devices 20 upon connection establishment, upon receiving a configuration update request and/or upon receiving a request to initiate ranging and/or position estimation by one of the involved devices.

The configuration of the requirements and parameters may be done in the form of a set of policy rules, which may define a set of conditions based on which a device can determine which configuration/method/parameters/values to apply, e.g., a condition defining a minimum measured signal strength above which a ranging measurement in a certain frequency may take place.

In an embodiment, the ranging or positioning may be executed between the device UE 10 and an anchor UE 14 or between the device UE 10 and the wireless access device 20, according to the configured parameters of a managing entity in the anchor UE 14 or a managing entity which may provide the configured parameters via the anchor UE 14. To this end, the anchor UE 14 may expose one or more of the configured parameters and/or the values that the UE selected and/or decided to use for the parameters to perform ranging (e.g. the ranging method used, bandwidth/frequency used, number of antennas used) for ranging or location service to one or more device UEs 10 and/or one or more other anchor UEs 14, e.g., through ProSe discovery messages and/or by transmitting the configured parameters after establishing a sidelink/PC5 connection with the one or more device UEs 10 and/or the one or more other anchor UEs (e.g., through a PC5 signaling message or RRC message or Direct Communication Request/Accept message).

The ranging service or positioning service may be executed by the wireless access device 20 or by the core network 30 (e.g., network controller device) or by proxy through an anchor UE 14. To this end, the devices UEs 10 and/or anchor UEs 14 that are involved in the ranging/positioning may send the configuration parameters that they selected and/or used to perform ranging (e.g., the ranging method used, bandwidth/frequency used, number of antennas used) (additionally or separately from the respective distance/angle measurements) to the ranging service (or proxy thereof) or location service (or proxy thereof) or a managing entity (which may collect the information from multiple UEs involved and send it to the ranging or location service). The ranging service or location service can use this information to determine how to calculate a position/distance/angle estimation and/or determine an accuracy estimation of the measurements, a threshold for accepting measurements, a value for measurement/calculation error compensation and/or to determine a change to the configuration of one or more UEs involved.

In an example, the network exposure function 38 may be used (e.g., by an external application) to control network level parameters and other parameters/configuration settings required for optimal performance of ranging and location service for the intended mobile devices. These may be combined with configuration parameters received from the involved device UEs 10 and/or anchor UEs 14. In case of overlapping configuration parameters with different values a priority scheme may be applied whereby configuration parameters received from a device UE 10 and/or anchor UE 14 may have precedence over a configuration parameter received via the network exposure function, or vice versa. Upon detection of an overlapping configuration parameter with different value, the location management function 34, and/or the ranging management function 36 may discard the measurements and/or measurement results and/or calculated distance/angle and/or may send an error message and/or may send a message to the respective device UEs 10 and/or anchor UEs 14 involved to update the configuration parameter.

Similarly, if a device UE 10 and/or anchor UE 14 receives a configuration parameter or a desired parameter value to be used that conflicts with a configuration parameter (e.g., range of valid values, or maximum/minimum values) received from a managing entity with a higher priority, it may discard the ranging request, discard a measurement/measurement result, discard a calculated distance/angle, generate an error message, request an update of the configuration parameters or request an exception from the higher priority managing entity.

In order to initiate ranging, the device UE 10 or an anchor UE 14 may send a signal to another device UE 10 and/or another anchor UE to request the start of a ranging session. This may be a separate signal or message, or may e.g. be indicated by setting an attribute during connection setup between the two UEs (e.g., a boolean 'rangingrequest' attribute as part of a Direct Communication Request message or an RRCSetupRequest). This is typically done after a discovery phase through which it may find out the configured parameters (as described above) and/or possibly other properties of the ranging service or location service provided by the other device (e.g. supported ranging capabilities, whether or not it acts as an anchor UE, which (preferred) ranging method to use, location information, device identifier, ranging constellation identity/identifier, key identifier, credentials (e.g. public keys), nonces, position information (e.g., its geographical/GPS coordinates), (supported) signal type(s), frequency/band information, which PLMN it supports or it can connect to, which location service or location service capabilities it supports or it can connect to, which ranging service or ranging service capabilities it supports or can connect to, synchronization/clock/timing information, whether or not it is in or out of coverage of an access device, and if in coverage which access device and its properties, whether or not it support ProSe relay or other ProSe or V2X or sidelink/D2D services, antenna information/configuration). Note that the above mentioned parameters may also be transferred (e.g., through a PC5-signalling or RRC message) after discovery, e.g. after a PC5/sidelink connection has been set up.

After receiving a signal to initiate a ranging session, the UEs involved may verify if the request comes from an authorized UE. To this end, the UEs may need to exchange credentials, may perform authentication and may contact the core network to authenticate the other devices and verify their authorization. Once the authorization is successful, one or more of the UEs may start to transmit ranging reference signals (e.g., position reference signals/sounding reference signals or other signals (e.g., ProSe discovery message), possibly using radio spectrum resources for sidelink communication or sidelink discovery. This may be a repeated signal for a configured number of times (e.g., with a certain pause/quiet interval between the signals) or until a signal to stop the ranging session is received. The timing of these signals (e.g. the start time of the first signal) may depend on a configured timing/delay, sending/receiving of a synchronization signal, sensing of a quiet period, QoS or quality of experience (QoE) information (e.g., of the ranging/location service or e.g. of other traffic), scheduled resources (e.g., semi-persistent resources), DRX/sleep information that may be configured and/or exchanged between the devices, a timing randomization function, signal quality measurements, doppler-shift/coherence time/hysteresis of measured signals, speed of the devices, etc.).

In another embodiment, the signal to initiate a ranging session may also be sent by an access device or a core network function (such as the location management function 34, and/or the ranging management function 36) to one or more of the UEs involved. In an example, the access device and/or core network function may be aware that two UEs are in vicinity (e.g., because they are both connected to the same access device), so that the access device or core network function may instruct the two UEs to initiate a ranging session, without the UEs having to perform a discovery phase. The access device or core network function may provide the necessary configuration parameters so that each UE knows exactly how to perform the ranging session (e.g., which frequency band or bandwidth to use, which mechanism, which type of signal, (temporary) device or ranging/session identifiers and/or credentials to be used during ranging, etc.), and it may also indicate the exact timing at which each UE is supposed to send a signal and in which order.

Note that any embodiment that describes a device UE 10 discovering and/or performing a ranging session with an anchor device UE 14 can be equivalently replaced with two device UEs 10 discovering and/or performing a ranging session with each other.

In a further embodiment, the device UE 10 can configure itself as an anchor UE if it detects a lack of anchor UEs 14 in its vicinity and/or if it is entitled to behave as an anchor UE by the managing entity (e.g. based on a set of pre-configured policies that may be configured by the network/access device) and/or if it has a good coverage of location service in its current location and/or has additional means of obtaining location coordinates (e.g., through a built-in GPS module). Upon self-configuration as an anchor UE, the device UE 10 can start advertising the ranging constellation and/or can transmit ranging reference signals.

In a further embodiment, the device UE 10 can stop working as an anchor UE if it detects the presence of multiple anchor UEs 14 in its vicinity and/or if it measures a good coverage of location service in its current location. Before self-configuration, the anchor UE might inform the lead anchor UE and/or managing entity and receive its authorization. The anchor UE might take this decision to stop working as an anchor UE based on a policy configured in the anchor UE by the lead anchor UE or by the managing entity.

In another embodiment, the device UE 10 can determine (when and how) to obtain its location coordinates either from a location service or from a ranging service based on ranging measurements, wherein one or more UEs in the ranging constellation 50 can act as a proxy for the location service and/or ranging service e.g. in a given geographical area e.g. by supporting similar protocols and (a subset of the) functions provided by a location service or ranging service. The device UE 10 may then automatically turn off its use of location services provided by the core network/access device if it discovers that the ranging constellation 50 of ranging capable anchor UEs 14 offers location coordinates and/or acts as a proxy for the location service or ranging service in the vicinity, and/or if it determines a poor signal coverage of access devices in a given geographical area (which would prevent proper/efficient own use of location services).

In a further embodiment, the device UE 10 can be self-configured or be configured by the managing entity to use ranging services within a given geographical area (e.g., inside a building) and to use location services outside the given geographical area (e.g., outside the building). The ranging measurements may be sent to the RMF 36 and/or the LMF 34 to translate the ranging measurements into geographical or relative location coordinates. The measurements may be sent by the device UE 10 and/or by an anchor UE 14 of the particular ranging constellation 50 and/or by a head anchor UE of the ranging constellation 50. The ranging measurements between the device UE 10 and multiple anchor UEs 14 in the vicinity may be sent separately or may be combined in a single report forwarded to the RMF 36 and/or the LMF 34. To this end, the UEs involved may send their measurements and/or estimated distances/angles between itself and one or more other UEs of the ranging constellation to the head anchor UE. If one or more anchor UEs are out of coverage, another (head) anchor UE that is in coverage may also act as a proxy for the location service or ranging service. In this case, the in-coverage UE may send the measurements or the report. When the entire constellation including the head anchor UE is out of coverage, then the head anchor UE may act as a proxy for certain functions (e.g., a subset of functions) of the location service and/or ranging service. These functions may include translation of distance and/or time and/or angle measurements to location coordinates, calibration of ranging measurements, temporary storage of measurements until a communication link with an access device is restored, etc.

Alternatively or additionally, the ranging measurements can be securely shared by the ranging service 36 to an application function 40 (e.g. a third-party application) via the NEF 38 to calculate the location coordinates of the device UE 10, upon authorization by the user of the device.

In a further embodiment, the device UE 10 may be configured to obtain or request its location coordinates based on ranging measurements from one or more of the anchor UEs 14 of the ranging constellation 50. An anchor UE 14 may advertise ranging reference signals (which may be detected by a device UE 10 in vicinity, e.g., based on their frequency, timing, signal characteristics/type, waveform, bandwidth, configured resources), or advertise ranging-based positioning (combining ranging and location service functionality) as a proximity service or advertise support for ranging/location services and/or other ranging/position capabilities, or provide information about its (last known) location, or transmit discovery messages in a configurable time interval known to a ranging service and/or configured on the UEs involved (e.g., by a managing entity) for the particular ranging constellation 50 with which the anchor UE 14 is affiliated. Thereby, the device UE 10 may identify and may check the integrity of the advertisement/discovery messages and may extract, e.g., timing information from the messages to calculate the distance between the device UE 10 and one or more of the anchor UE(s) 14 of the ranging constellation. Furthermore, the device UE 10 may calculate a confined area which approximates its location coordinates, based on e.g. one or more distance(s) obtained from round-trip-time measurement(s) and/or time-of-flight estimation(s) between the device UE 10 and the one or more anchor UE(s) 14. Moreover, the device UE 10 may receive a list of authorized anchor UEs 14 in its vicinity via the RMF 36 and, upon approaching an authorized anchor UE 14 within its ranging distance, the device UE 10 may obtain location coordinates (e.g., calculated coordinates of device UE 10, location coordinates of the anchor UE 14 and/or the location coordinates of one or more access devices or Position Reference Units) and/or an estimated relative position/distance/angle between one or more devices of the constellation from the anchor UE 14 without using the location service of the core network 30 (e.g., network controller device). In this case, the anchor UE 14 might measure the distance and/or angle between itself and the device UE 10 using the ranging procedure/service and translate the distance into location coordinates based on its current location coordinates, locally on the device. Alternatively, the device UE 10 may measure the distance and/or angle using the ranging procedure/service and forward it to the anchor UE 14 to request for translating the measured distance into geographical coordinates.

Alternatively, the anchor UE 14 may provide its geographical coordinates to device UE 10, which the device UE 10 can use after measuring the distance and/or angle between itself and the anchor UE 14. Transmitting the geographical coordinates of anchor UE 14 should be done in a secure manner, hence the anchor UE may only provide its coordinates after a secure communication channel between device UE 10 and anchor UE 14 has been established and/or sends the geographical coordinates protected by a key that only allows device UE 10 or a set of authorized devices UE 10 to decrypt this information.

In an embodiment, a device UE 10 requiring ranging over sidelink/PC5 as well as supporting an anchor UE 14 may be configured to exchange ranging capabilities enabled by means of non-RF ranging sensors, e.g., ultrasound sensors. In particular, a device UE 10 or anchor UE 14 may be capable/enabled/authorized to act as an ultrasound source, e.g., using a speaker, or as an ultrasound receiver, e.g., using a microphone.

In an embodiment related to the previous one, the device UE 10 requiring ranging over sidelink/PC5 interface as well as the anchor UEs 14 supporting the ranging operation may rely on "non-sidelink ranging reference signals" that are not exchanged over sidelink/PC5 interface, but whose parameters are configured or announced over sidelink/PC5 interface. In particular, the "non-sidelink ranging reference signals" may refer to an ultrasound signal generated by, e.g., the device UE 10 or an anchor UE 14 and received by the anchor UE 14 or device UE 10, respectively. In particular, parameters of an ultrasound signal may include the frequency of the ultrasound signal, e.g., 40 Khz, the timing (starting time) of the ultrasound signal, or an identifier, e.g., a modulation of the ultrasound signal.

In a related embodiment, a device UE 10 may act as an announcing UE and send discovery messages (e.g., sporadically or in a regular manner) that are received by anchor UEs 14 acting as monitoring UEs. The discovery messages sent by the device UE 10 may include a timing or identifier of the "non-sidelink ranging reference signals", e.g., a given delay with regard to the transmitted discovery message. The discovery message may also include a temperature/humidity a measured by the device UE 10, since those are some factors affecting the speed of sound in the air. At least one anchor UE 14 (monitoring) in a ranging constellation 50 may receive the discovery message and may learn the parameters of the "non-sidelink ranging reference signals" and may measure afterwards the "non-sidelink ranging reference signals" obtaining a ranging measurement with the device UE 10.

The usage of such "non-sidelink ranging reference signals", e.g., ultrasound signals, can have multiple advantages including accurate ranging measurements because of the lower speed of sound through the air compared with the very fast propagation of messages through sidelink/PC5. For instance, in above embodiment, assuming the device UE 10 and the anchor UE 14 are 10m away from each other, the transmission of the discovery message has a delay of $1/3 * 10^{(-7)}$s. Assuming a clock synchronization error of $1/3 * 10^{(-6)}$ and both the device UE 10 and the anchor UE 14 use a speed of sound of 340 m/s when the actual one is 339 m/s, then the ranging measurement result is 9,97 m.

In an embodiment, instead of transmitting information about the location (e.g. geographical coordinates) of an anchor UE 14 to device UE 10 or to another anchor UE, the anchor UE 14 may transmit an identifier (e.g., a location identifier, which may e.g. be preconfigured/allocated by a location service/database to the anchor UE or self-allocated) to the device UE 10 or the other anchor UE (e.g., in a discovery message, connection setup message, PC5 signalling message, or user plane message (e.g. message over IP layer)), possibly together with an identifier or address of a location service/database, which can be used by the device UE 10 or the other anchor UE that receives this identifier to retrieve the location coordinates of the anchor UE through a secure connection with a location service/database (e.g., as identified by the optionally provided location/database identifier or address, or a default location service/database known to the UE or the Core Network to which the UE connects). To enable this, the anchor UE may grant permission to retrieve its location by doing one of the following:

- by providing authorization credentials to the device UE 10 or the other anchor UE that can be used to authenticate/verify the authorization (i.e., provided by the connected anchor UE 14) is authentic, e.g. by performing an authentication procedure with the respective anchor UE 14, or by verifying if the credentials match or can be securely correlated to previously stored credentials of anchor UE 14 in device UE 10, the other anchor UE or the location and/or ranging service or a proxy thereof, or a core network function (e.g., UDM/AUSF) that device UE 10 or the other anchor UE can 33connect to, and/or
- by providing authorization message/credentials to the respective location service/location database, whereby the message/credentials can be verified to originate from the respective anchor UE (e.g., performing an authentication procedure with the respective anchor UE 14), or by verifying if the credentials match or can be securely correlated to previously stored/ credentials of the anchor UE 14 in the location and/or ranging service, or a core network function (e.g., UDM/AUSF), and/or
- by granting permission for this by providing consent in its subscription (e.g., UDM), or through providing consent through the Network Exposure Function (NEF).

In a further embodiment, the device UE 10 may calculate its location coordinates based on ranging reference signals obtained from one or more anchor UEs 14 via a sidelink channel (e.g., through sidelink discovery messages or other signals transmitted using sidelink resources), and position information of the one or more anchor UEs 14. To this end, the device UE 10 and the one or more anchor UEs 14 may exchange messages to initiate a ranging session. One or more of these messages may include a ranging session ID (which may be used by all UEs involved in joining the ranging session) and/or may include a ranging constellation identity and/or may include ranging reference signals. The ranging reference signals may include (encoded) information about the type of reference signal, identity information of a UE and/or ranging session ID and/or ranging constellation identity, identity information of the constellation, credential information, nonces, timing information, or distance/angle/position information.

If a device UE 10 wants to initiate ranging with two or more anchor UEs it may indicate the number of anchor UEs and/or a set of anchor UE identifiers and/or a constellation identifier as part of the messages to initiate a ranging session. These messages may be sent as multicast/broadcast messages to all anchor UEs involved, or may be sent via unicast message to one of the anchor UEs (e.g., the head anchor UE), upon which the anchor UE that receives this unicast message will send respective messages to other anchor UEs within the constellation or in vicinity to invite them become part of the ranging session and/or to initiate ranging with device UE 10, and/or to send them the respective configuration parameters for ranging.

The location coordinates of the anchor UEs 14 may be exchanged with the device UE 10 via the sidelink channel and the calculation of the position may be done after the device UE 10 has (simultaneously) achieved a clock time synchronization with those anchor UEs 14. By using Round Trip Time and/or Time of Flight measurements based on the ranging reference signals, the distances between the device UE 10 and the one or more anchor UEs 14 can be calculated and may be exchanged between the device UE 10 and the one or more anchor UEs 14. Also, the angle may be determined if the device UE 10 or anchor UE 14 has multiple antennas. Assuming the device UE 10 and the one or more anchor UEs 14 are in the same horizontal plane (i.e., are at similar altitude) and that the distance and/or angle between the anchor UEs 14 can be calculated (e.g., based on the geographical coordinates of the anchor UEs 14 and/or distance/angle measurements performed between two or more anchor UEs 14, the results of which may be shared with the device UE 10 and/or a ranging/location service), the position of the device UE 10 can be estimated based on trilateration and/or triangulation by using the distance measurements between the device UE 10 and at least two anchor UEs 14 or the distance and angle measurement between the device UE 10 and at least one anchor UE 13.

In order to deal with possible altitude differences between UEs in the ranging constellation, the device UE 10 may require a distance and/or angle measurement with an additional anchor UE as additional reference. Alternatively, the device UE 10 may have other means to determine the altitude such as a barometric pressure sensor. If an anchor UE 14 knows its altitude (e.g. above sea level or a certain horizontal plane) for example as determined by a barometric pressure sensor or by a GNSS, the anchor UE 14 may transmit information about its altitude (e.g. in the form of a z-axis coordinate, meters above sea level or a certain horizontal reference plane, or as barometric pressure value) to the device UE 10, which may use this in calculating possible difference in altitude between the device UE 10 and the respective anchor UE 14. Alternatively, the device UE 10 may share information about its altitude to the anchor UE 14 and/or ranging/location service for calculating the altitude difference. Once the altitude difference is calculated/estimated, this value may be used in subsequent (3D) location coordinate calculations to estimate the location of the device UE 10 including its altitude, taking into account the determined altitude difference(s) between the device UE and one or more anchor UE(s) 14.

In a further embodiment, the wireless access device 20, in combination with the ranging and location services, may be communicatively coupled to the device UE 10 and/or an anchor UE 14. The mobile UE 10 may report its device capabilities and application requirements to the RMF 36 and/or the LMF 34. The anchor UE 14 may report its current configuration and evolution of the members of the ranging constellation 50 (such as number of devices, their identities, their capabilities, their estimated positions, their estimated speed/mobility, information about their battery levels/capabilities, information about their resource capacity, or information about which devices are in coverage and which are out-of-coverage) to the RMF 36 and/or the LMF 34 either directly or via a (head) anchor UE. The RMF 36 and/or the LMF 34 might configure the device UE 10 and/or anchor UE 14 with a policy determining the parameters to perform ranging, ranging services and/or location services, the parameters of which may be based on the information received about the ranging constellation.

In the following, specific ranging-based positioning embodiments are described in more detail with reference to the network architecture of Fig. 5.

In an embodiment related to a switching to ranging services or ranging-based positioning services, the managing entity can track the locations at which there are a sufficient number of ranging capable devices (e.g., configured with their current location or having an active location service) that together may constitute a ranging-assisted constellation (e.g., ranging constellation 50) and that can act as a proxy for a location service in a given geographical area.

A device UE 10, upon entering this geographical area, may configure itself or be configured by the managing entity to use a ranging service within the given geographical area (e.g., based on (discovered/configured) information about one or more ranging constellations within the area). To this end, the device UE 10 may use policy information (e.g., received from the managing entity) that associates the use of ranging services with location/geographical area information/tracking area/registration area/cell ID/Synchronization Signal Block (SSB) index. The device UE 10 may use tracking area information/cell ID/SSB information received from an access device, relay device or a discovered ranging capable device and correlate this with the policy information to determine whether ranging should be enabled or not and/or which constellation and/or which anchor UEs 14 to use. The device UE 10 may be configured with a list of approved constellation identifiers and/or anchor UEs 14 it can select for ranging and/or connect to in order to initiate ranging, and possibly credential information to allow secure communication setup with the devices of the constellation respectively the anchor UEs 14. This list may be prioritized. Alternatively or additionally, the device UE 10 may be configured with policies that specify a minimum number of anchor UEs 14 and/or requirements on the capabilities and/or characteristics of the anchor UEs 14 (such as their (relative) movement being below/within certain threshold values, minimum/maximum distance from device UE 10, signal strength thresholds, geographical area information, tracking area information, PLMN information) within a constellation and/or that can be discovered in the vicinity of device UE 10, to determine whether or not the device UE 10 should switch on ranging or initiate a ranging session or to determine which constellation/set of anchor UEs to select/connect to for ranging. The device UE 10 may also use its estimated position based on other means (e.g., GPS, Wi-Fi, or dead reckoning based trajectory interpolation based on e.g. built-in accelerometer) to determine if ranging services should be used.

Once the device UE 10 has determined to use ranging services, it may switch on discovery of other ranging capable UEs in its vicinity and/or may connect (directly via Uu or via a relay device) to a ranging service provided by the network which may further instruct/configure the device UE 10. Alternatively, discovery of other ranging capable UEs is always switched on, and the determination to use ranging can be based on discovered information from the other ranging capable UEs (e.g., whether or not the discovered UEs are anchor UEsor based on (discovered/configured) information about one or more ranging constellations within the area, e.g., based on a constellation identity discovered via one of the ranging capable UEs, or discovering the presence of one or more UEs that constitute a ranging/positioning constellation).

However, the UE 10 may still use other existing positioning services.

Similarly, the anchor UEs 14 may be configured by the managing entity or may configure themselves to switch on ranging/ranging services (e.g., start transmitting and/or receiving discovery signals and/or initiate a ranging session) upon entering a geographical area or upon a device UE 10 entering the area. Note that each time a device UE 10 or anchor UE 14 enters a new area or comes in vicinity of a new ranging constellation, it may need to request or may have to receive a new/fresh authorization and/or obtain a new/fresh set of credentials from the core network/access device/RMF/LMF/(head) anchor UE through a Uu direct connection or PC5 direct/indirect connection before or upon establishing a new ranging session or joining the new ranging constellation.

A device UE 10 or anchor UE 14 may also have policies to determine if for a particular location/geographical area information/tracking area/registration area/cell ID/Synchronization Signal Block (SSB) index licensed or unlicensed spectrum can be used or needs to be used (and may also include information about preferred frequencies/bands, bandwidth, etc.). An additional criterium of whether licensed or unlicensed spectrum can/needs to be used, and that may also be part of the policy information, is whether the device UE 10 and/or anchor UE 14 are in coverage of an access device or out of coverage. If both UEs are in coverage, then usually it will be allowed to use licensed and unlicensed spectrum, and if both UEs are out-of-coverage, then it is usually only allowed to use unlicensed spectrum, given that the mobile network operator would like to control the use of its licensed spectrum. A particular situation is when one UE involved in a ranging session (e.g., the device UE 10) is out of coverage, and another UE involved in the ranging session (e.g., the anchor UE 14) is in coverage. Also, this situation may change as the UEs may be moving. Hence, it is important that the UEs involved in ranging can inform each other beforehand (e.g., via a core network function) and/or during discovery, connection setup, initiating a ranging session and/or whilst performing the ranging procedure of their coverage status. A UE may determine whether or not it is out of coverage based on some (pre-configured) thresholds on signal quality/signal strength. If the signal quality/strength is below a certain threshold the UE is considered to be out of coverage. A UE may expose its coverage status (e.g., whether it is in coverage or not) as a field within a transmitted discovery message (e.g., with a boolean value to indicate if it is in network coverage or not, or through some signal quality/strength values/levels, or through exposing or not exposing cell-ID information, or by sending a discovery response message on a different (e.g. unlicensed) frequency band than a discovery request message). If the receiving UE receives a discovery message indicating that the other UE is out-of-coverage it may be configured/required/instructed to use unlicensed radio spectrum resources instead of licensed resources to set up a subsequent connection to initiate a ranging session or to perform ranging using ranging reference signals. The UE receiving the discovery message may be preconfigured (e.g., through a policy) whether or not it can make an exception to connect with licensed resources instead if the UE receiving the discovery message itself is within coverage of the network. Such pre-configuration/policy may also define a distance or area information that may indicate a maximum allowed displacement between the UE receiving the discovery messages and the UE transmitting the discovery message to occur within which it is allowed to use licensed spectrum, and outside of which unlicensed spectrum needs to be used. The UE receiving the discovery message may be configured/required to limit its transmit power for subsequent signals that it transmits on licensed spectrum in order to prevent the signals to travel beyond the maximum allowed distance. If the receiving UE can determine its own position within the preconfigured area information, it may be configured/required to limit its transmit power for subsequent signals that it transmits on licensed spectrum in order to prevent the signals to travel beyond the allowed area. Similarly, during subsequent message exchanges for connection setup, initiating a ranging session or to perform ranging using ranging reference signals, each UE may transmit information about its coverage status using an attribute within one of those messages, or as a separate message (e.g., a MAC Control Element may be concatenated to one of those messages). If a change occurs in the coverage status during these procedures, the UEs involved need to switch their use of frequency/bands used. For example, if the UEs were initially communicating over licensed bands, they may be configured/required/instructed to switch to use unlicensed bands instead. To this end a configuration change procedure may need to be performed in which at least one of the UEs informs the other UE(s) to switch to another band to continue the procedures by indicating a new frequency and/or an updated coverage status in a message transmitted to the other UE(s). Instead of having a message exchange to determine a new frequency to be used, the UEs involved may also be configured with a default/fall-back frequency on which to continue the procedures if the UE receives an update to the coverage status of the other UE. Alternatively, the UEs involved may be configured with a time interval during which they may be exempted from switching frequency bands, e.g. for a certain amount of seconds or until (a part of, e.g. a certain burst of ranging reference signals) the ranging procedure is finished. The UEs may also be configured with a maximum distance within which it is allowed to continue licensed spectrum and outside of which unlicensed spectrum needs to be used. The UEs may use the ranging results obtained thus far to determine that the distance is within the limits to continue to use licensed spectrum or determine that it is outside the limits and hence need to switch to unlicensed spectrum. In a related example, a device UE 10 is out of coverage and an anchor UE 14 is within coverage and may know its position or provides a location/ranging service proxy or has access to a location/ranging service. The device UE 10 may perform ranging in unlicensed spectrum to determine the distance and/or angle (using one of the previously described methods) between itself and the anchor UE and/or may receive a signal (e.g., discovery message or other ranging reference signal) from anchor UE 14 (which may send such signal once in a while on a set of preconfigured licensed/unlicensed radio spectrum resources) through which device UE can determine the distance and/or angle (using one of the previously described methods). By using the measured distance and/or angle the device UE 10 may determine a position estimate (either by itself after receiving some information about the anchor UE's location, or by making use of the location/ranging service proxy, or by accessing a location/ranging service (e.g., through relay connection and/or by using a last known position of device UE 10 or anchor UE 14), and based on this position estimate determine that it is located within a certain geographical area for which it is configured/allowed to use licensed spectrum (for a certain PLMN) for using sidelink resources (e.g., for communication/ranging purposes).

The configuration of the device UE 10 by the managing entity may be achieved by assigning security keying materials and ProSe discovery information as described in 3GPP specifications TS 33.303 and TS 33.305. In particular, a set of discovery user confidentiality keys (DUCK), discovery user integrity keys (DUIK) and/or discovery user scrambling keys (DUSK) can be assigned to enable integrity protection, scrambling protection, and/or confidentiality protection. The device UE 10 may also be provided with, e.g., an identifier identifying the ranging application. These parameters may be used in combination with discovery messages to allow devices allowed to perform ranging with each other to discover each other.

The managing entity may be configured to automatically reconfigure the device UE 10 to connect to location services for obtaining location coordinates when the device UE 10 is leaving the given geographical area. The device UE 10 might also reconfigure itself (e.g., based on a policy that associates the use of positioning services based on location/geographical area information/tracking area/registration area/cell ID/Synchronization Signal Block (SSB) index).

The managing entity may automatically turn on or off the ranging and location services depending on the latest known location of the device UE 10.

The device UE 10 may automatically turn off the location service by itself upon discovering a constellation (e.g., ranging constellation 50) of ranging capable UEs in the vicinity that can offer location coordinates as a result of ranging measurements either directly or by translating the ranging measurements to location coordinates via a location service known to the constellation of ranging capable UEs.

In another (alternative) embodiment related to the switching to ranging services or ranging-based positioning services, the device UE 10, upon temporarily disconnecting from the location service, e.g., when out of range, can automatically turn on the ranging services and search for nearby ranging-enabled anchor UEs 14 and/or a constellation (e.g., ranging constellation 50). To this end, the device UE 10 may be configured with a minimum/maximum signal strength (e.g., RSRP) or other signal quality parameters (e.g., RSRQ, number of failed connection attempts) for signals received from nearby access devices, below/above which to switch on or switch off its usage of ranging and/or positioning service.

Upon discovering a ranging capable device within the ranging distance, the device UE 10 can measure the distance and angle with the ranging capable device (e.g., an anchor UE 14) and continuously keep track of these measurements and their timing for every distance moved by the device UE with respect to the first measurement made by the device UE 10 with the discovered ranging capable device. The device UE 10 may periodically attempt to regain the connection to the location service or obtain new location coordinates from the ranging capable device, while keeping track of the distance and angle measurements obtained from the ranging capable devices along its movement trajectory. This allows the device UE 10 to estimate its relative velocity and/or movement pattern/trajectory. If information about absolute/geographic location and/or the velocity and/or movement pattern/trajectory of the respective anchor UE(s) 14 and/or whether the respective anchor UE 14 is stationary or not, is transferred to the device UE 10 (or vice versa), then also the absolute velocity and/or movement pattern/trajectory of the device UE 10 within a fixed/absolute/geographical coordinate system may be calculated.

In an example, inertial sensors (e.g., accelerometers and/or gyroscope or the like) provided at the device UE 10 can be used in assisting the ranging service for determining and tracking the movement trajectory.

The data from such an inertial sensor can be locally processed on the device UE 10 to calculate the distance and the direction travelled by the device UE 10 from the moment at which the device UE 10 lost its connection to the location and/or the ranging service. The device UE 10 may locally compute the movement trajectory based on the distance and direction travelled and combine this information with the last known location coordinate to determine the current coordinates of the device UE 10. Alternatively, the device UE 10 may append the distance and direction information calculated based on the inertial sensor(s) in the discovery message sent via a PC5 interface. Either the anchor UE 14 or the RMF 36 and/or LMF 34 can then calculate the current coordinates based on the inertial sensor measurements from the device UE 10. Distance and direction calculated from the inertial sensor measurements might also be used optionally and/or in addition to the ranging measurements, depending on the error rate of the ranging measurements at a given environment and other factors such as user preference and/or device capability.

Upon re-establishing the connection with the location service and obtaining the current location coordinates, a device UE 10 may automatically re-calculate the location coordinates based on the last known location coordinates and distance and angle measurements made while the connection to the location service was broken. Alternatively, upon re-establishing connection with the location service, the device UE 10 may transmit the distance and angle measurements made (e.g., to nearby anchor UEs 14 or other ranging capable UEs) while the connection to the location service was broken and may also transmit the last known location coordinates. This allows the location service to quickly determine the current location of device UE 10.

It is noted that an anchor UE 14 in the ranging constellation 50 while performing a ranging operation with the device UE 10 can report the identity/ranging measurement of the device UE 10 to its ranging service or location service so that location coordinates corresponding to the current location of the device UE 10 can be updated in a location registry.

In another embodiment, the device UE 10 and anchor UEs might transmit and/or exchange positioning signals and/or messages in different frequency bands, e.g., FR1 and FR2, frequency bands possibly using carrier aggregation (i.e., simultaneous transmission on two different bands of a ranging reference signal that may be duplicated or split across the bands) or by using the different bands intermittently.

The term "positioning signals" as used herein and in the subsequent embodiments can be used in the context of location services using access devices (e.g., access device 20 using an infrastructure connection/Uu interface) as well as for ranging signals for determining the distance and/or angle between two devices (e.g., using sidelink/PC5 interface).

For instance, in a first step, the device UE 10 might receive or send a message requesting ranging services in the FR1 frequency band; in a second step, the device UE 10 might receive or transmit positioning signals in both the FR1 and FR2 frequency band; the device UE 10 may use the signal quality or the result of the distance measurement of the message (e.g., ranging reference signals) sent in the FR1 frequency band to determine that the device UE 10 is sufficiently close and/or has line of sight (LoS) with another ranging capable UE, in order to determine whether or not to send a signal in FR2. The decision may also be based on the device capabilities or instructions received from the other ranging capable device that allows the device to determine that the other ranging capable UEs supports the FR2. To this end, the supported and/or preferred frequencies/bands of the ranging capable UEs may be exposed/exchanged during discovery or connection setup between the two ranging capable UEs. Similarly, also support for carrier aggregation and/or supported bands for carrier aggregation may be exposed/exchanged. In a third step, the device UE 10 or anchor UE 14 might gather measurements of those positioning signals, and optionally, send them to a managing entity or a ranging/location service for evaluation; in a fourth step, the device UE 10 or the anchor UE 14 or the managing entity or a ranging/location service might determine the LoS features of the communication link based on gathered measurements. The positioning signals or messages might assist e.g. in the computation of the round-trip time. When the measurement is performed when exchanging positioning signals or messages in the FR1 band, the measurement is likely to succeed even if it there is no direct LoS, e.g., when devices are separated by a wall in a house; however, when the measurement is performed when exchanging positioning signals or messages in the FR2 band, the measurement will not be reliable due to the bad propagation of wireless messages in the FR2 band.

Hence, based on these measurement results (in particular, if measurements in FR1 were successful whereas in FR2 the measurements were not successful), it can be decided that the device UE 10 and an anchor UE 14 are or are not within each other's line of sight. Based on whether device UE 10 and anchor UE 14 are within line of sight, the UEs may decide to use only FR1 frequencies for ranging or communication, may select a particular subset of FR1 frequencies for ranging or communication, may change the ranging method used, may decide to stop/start ranging, or may decide whether or not to set up a connection and/or ranging session.

Alternatively, the measurements done in the FR1 and FR2 bands might be analyzed, e.g., by the managing entity, to show whether the received power varies as expected if LoS is available.

The transmitting UE may change the transmit power of the signal in the different frequency bands in such manner that a receiver would be expected to measure similar and/or specific values for signal strength/quality (according to calibration information) and may include transmit power information as part of the positioning signal and/or a message that was exchanged beforehand (e.g., as part of the ranging session setup).

In an embodiment related to centralized localization based on ranging measurements with the anchor UE nodes 14, the device UE 10 may approach an anchor UE 14 of the ranging constellation 50 to perform a ranging measurement. Upon receiving a ranging request from the device UE 10, the anchor UE 14 may notify the device UE 10 about the ranging constellation 50 either via the ranging service or via another communication channel.

The device UE 10 can store the constellation information and as long as it is in the vicinity of the ranging constellation 50, it can decide if it wants to receive location coordinates from one or more of the anchor UEs 14 or other UEs part of ranging constellation 50 (which may offer ranging services and/or can function as a proxy for a location service) based on the ranging measurements.

The device UE 10 and the other device UEs 10 and anchor UEs 14 may be part of a positioning constellation 60, whereby a location service may (centrally) determine the location of device UE 10. The device UE 10 may connect to the location service and/or receive information from the location service either directly through Uu interface or via a relay connection between the device UE 10 and an access device 20 providing access to the location service (e.g., through a secure connection or e.g. exposed via a discovery message of the relay device). An anchor UE 14 or a ranging capable device UE 10 may act as such relay device (e.g., using ProSe relay services) for other UEs, e.g., other UEs as part of the positioning constellation. The UEs that are part of the constellation may be configured with a specific Relay Service Code that allows other UEs that are part of the constellation and/or that are in the vicinity and/or that are capable and/or enabled and/or authorized for ranging and/or location services to access a location service and/or ranging service via a ProSe relay connection based on that specific Relay Service Code. An anchor UE that offers a ranging service and/or location service (e.g., a ranging based positioning service) may offer a ProSe/V2X/D2D service to access such ranging and/or location service over sidelink, e.g. to be able to acquire/provide position information or to initiate ranging. Such ProSe service may be announced through sidelink discovery through a specific ProSe/V2X/D2D service identifier or application code, after which other UEs may set up a connection over sidelink to such service and use such service. The ranging service and/or location service may provide credentials that allow and/or that can be used for protecting the discovery and/or message exchange between the ranging capable device UE 10 acting as a remote UE, the respective UE acting as relay device and the ranging/location service.

When the device UE 10 needs to obtain its location (e.g., geographical) coordinates, it can initiate a ranging request via a ranging service with any anchor UE 14 of the ranging constellation 50 and indicate its need for location coordinates.

Upon receiving the request for location coordinates, (at least) one anchor UE 14 of the ranging constellation 50 may perform a ranging measurement and share its ranging measurements, e.g., with the RMF 36 and/or the LMF 34, to obtain the geographical coordinates of the device UE 10 based on the ranging measurements between the device UE 10 and the anchor UE 14 of the ranging constellation 50. If more than one anchor UE 14 perform ranging measurements, then the ranging measurements may be combined in a single report. Note that the device UE 10 may create such a report since it may perform ranging with each and every anchor UE 14. The report may be sent directly to, e.g., the RMF 36 and/or the LMF 34, or indirectly via the (head) anchor UE 14.

It is noted that the LMF 34 and/or RMF 36 may request the anchor UE 14 to provide, if known, its own known location coordinate information and/or the antenna orientation information to the LMF 34 and/or RMF 36. The antenna orientation information may then be used by the RMF 36 to improve ranging methods for e.g. customized beamforming to improve an angle-of-arrival calculation between the anchor UE 14 and the device UE 10 for the given antenna orientation. Additionally, the LMF 34 and/or RMF 36 may request a 5GS infrastructure to assess the location and orientation of anchor UEs 14. This may require the anchor UEs 14 to, e.g., measure PRS signals and send these measurements to the LMF 34 and/or RMF 36 for location estimation. These measurements can also be used to determine the orientation of the anchor UE. For instance, if the anchor UE 14 returns its beamforming settings (e.g., transmission power, direction) when performing measurements of e.g. reference signal time difference (RSTD) and/or reference signal received power (RSRP) with one or more different wireless access devices 20 (e.g., gNBs), the 5GS infrastructure may determine the orientation of the anchor UE 14. In this case, the wireless access devices 20 (e.g., gNBs) may carry out a beam sweeping during the initial access or the broadcast of the SSBs or beam determination in idle mode (e.g., as described in section 6.1.6.1 of 3GPP TS 38.802 "Study on New Radio Access Technology", V14.2.0). This allows the gNBs to determine the location of the anchor UE 14. Similarly, the anchor UE 14 might transmit, e.g., a synchronization signal (SS), in multiple directions. The wireless access devices might measure the received power of different synchronization signals and combine the measurements to compute the orientation of the anchor UE 14 depending on the signal/response received by the wireless access devices 20 (e.g., gNBs) from the anchor UE 14 in different beam directions.

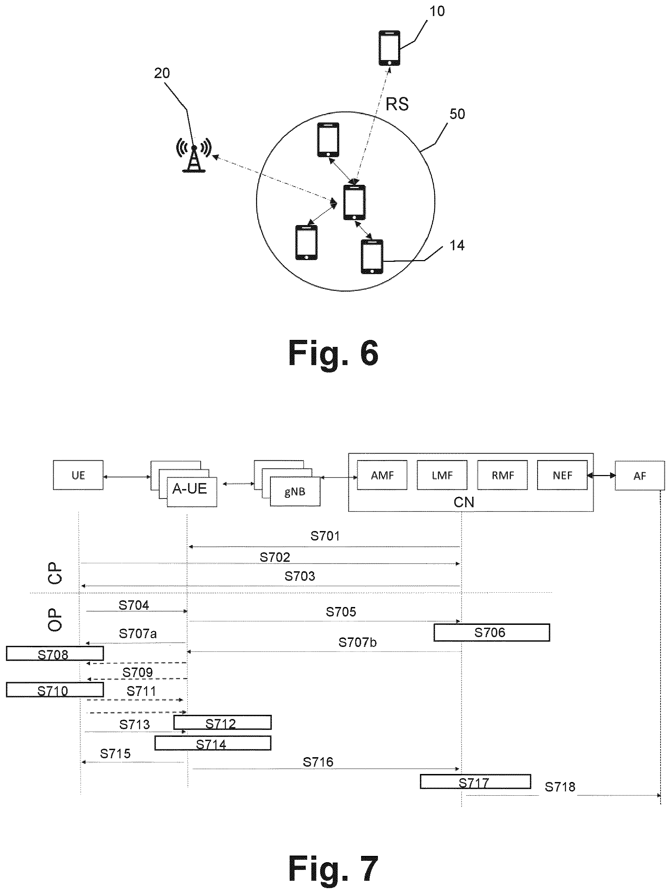

Fig. 6 schematically shows a network architecture where a mobile terminal (e.g., device UE) 10 approaches a ranging constellation 50 of mobile terminals (e.g., anchor UEs) 14 to get assisted by ranging services (RS) for location coordinates obtained from a location service (LS), according to various embodiments.

In an embodiment related to decentralized localization based on ranging measurements with the anchor UEs 14, one of the anchor UEs 14 may receive a request for location (e.g. geographical) coordinates from the device UE 10 either directly or via another device UE close to the ranging constellation 50 and may acknowledge the request.

The ranging measurements corresponding to device UE 10 and the ranging constellation 50 may be used by the anchor UE 14 to locally calculate the location coordinates of the device UE 10 (using any of the concepts described in the present disclosure) based on its own location information obtained from a location service or an additional location module provided on the anchor UE 14 and the ranging measurements with the device UE 10.

It is noted that the anchor UE 14 could also inform the device UE 10 about the local coordinate system used by the ranging constellation 50 and the expected level of accuracy for a given ranging measurement performed between the device UE 10 and the anchor UE 14. If the ranging constellation 50 supports multiple coordinate systems, then the anchor UE 14 may inform the device UE 10 about the different types of coordinate systems supported by the ranging constellation 50. The device UE 10 may select one of the supported coordinate systems or let the anchor UE 14 decide about a default coordinate system for the given device UE 10 depending on its device characteristics. Note that this local coordinate can be translated to geographical coordinates either by an anchor UE 14 or other device UE 10 that can act as a proxy for the location service or by the location service of the wireless access device 20 or offered/accessible by the core network upon request by the device UE 10. To this end, a ranging capable UE may transmit a message to a location and/or ranging service (or a proxy of the location service or ranging service) in the core network or offered by an access device or another ranging capable UE (e.g. anchor UE 14) over a secure interface, the message containing a distance and/or angle measurement result (e.g. based on ranging reference signal, such as ID and/or timing information), or a distance and/or an angle calculation result (e.g. based on a ranging measurement), and optionally a location coordinate system to use, and optionally including altitude and/or velocity/accelerometer information, whereby upon receiving the message by the location/ranging service or location/ranging service proxy a response message is returned which includes the resulting calculated location coordinate using the indicated optional location coordinate system or a default (e.g. geographical) coordinate system.

In order to allow the location and/or ranging service or a proxy thereof to calculate the position or distance/angle the device UE 10 may grant permission by providing authorization credentials to the location and/or ranging service or a proxy thereof as part of the same message or subsequent message, that can be used to authenticate/verify the authorization is authentic (i.e., provided by device UE 10), e.g. by performing a respective authentication procedure with device UE 10, or by verifying if the credentials match or can be securely correlated to previously stored credentials of device UE 10 in the location and/or ranging service or a proxy thereof, or a core network function (e.g., UDM/AUSF), and/or by granting permission for this by providing consent in its subscription (e.g., by UDM), orthrough providing consent through the Network Exposure Function (NEF).

Similarly, with a similar message that may include also position information or an identifier of a device or reference point, a ranging capable UE may request a location and/or ranging service (or a proxy thereof) to provide/calculate/return a distance and/or angle between the ranging capable UE and the indicated device or reference point, after which the location and/or ranging service (or a proxy thereof) will return the resulting calculated distance and/or angle.

In another (alternative) embodiment related to decentralized localization based on ranging measurements with the anchor UEs 14, the ranging constellation 50 may be configured and deployed in an indoor environment or a known target area such that it can have its own local coordinate system relative to a reference geographical coordinate system.

A device UE 10 approaching the ranging constellation 50 and authorized to use the ranging constellation 50 may request a location coordinate from an anchor UE 14 of the ranging constellation 50.

Upon receiving the request, the anchor UE 14 itself or the head device of the ranging constellation 50 on its behalf may select at least one of the anchor UEs 14 (typically 2 or 3) of the ranging constellation 50 to perform ranging measurements with the device UE 10, such that the selected device(s) are within a required ranging distance of the device UE 10 and can perform ranging with the device UE 10 in order to calculate the position of device UE 10 according to the local coordinate system of the ranging constellation 50.

The selected anchor UEs 14 of the ranging constellation 50 may initiate the ranging measurements with the device UE 10, e.g., in a synchronous or coordinated manner, to obtain ranging measurements. The ranging measurements may be used either by the head device of the ranging constellation 50 or by the ranging service in combination with the location service, to position the device UE 10 in a local coordinate system of the ranging constellation 50. The coordinated manner may be to perform sequenced ranging measurements in time to avoid all measurements initiated at the same time thereby causing mutual interference. It could also mean to perform the ranging measurements relatively closely together in time in order to get an accurate result for cases where the device UE 10 is moving.

It is noted that to protect the privacy of the ranging procedure, specific ranging parameters (e.g., the ranging reference signal used at a given instant of time by a first UE) and/or ranging measurements/results may only be communicated to a second UE once the second UE has been authorized to use the ranging reference signal of the first UE. To prevent tracking of a UE based on ranging reference signals and/or positioning messages broadcasted by the UE, an identity and/or resources (timing/frequency) of the ranging reference signals and/or positioning messages may be randomly allocated. For instance, instead of following a well-known or deterministic pattern (e.g., a periodic pattern of signals/messages transmitted at periodic/specific time/frequency), the signals/messages might follow a random looking pattern only known to authorized devices. Additionally, after each ranging session, the UEs may need to request or may have to receive a new/fresh authorization and/or obtain a new/fresh set of credentials from the core network/access device/RMF/LMF/(head) anchor UE through a Uu direct connection or PC5 direct/indirect connection, before or upon establishing a new ranging session.

In an example, a device UE 10 might approach an area and may be provided with ProSe discovery parameters if authorized for a ProSe-based ranging/localization service. Based on these ProSe discovery parameters, the device UE 10 can discover other ranging capable UEs (e.g., anchor UEs 14) that are in the area, which may use one of the ProSe discovery procedures. Once discovery is performed and using a PC5 secure connection, or directly in the discovery messages themselves (e.g., as part of a metadata field), the anchor UEs 14 may provide the ranging/localization services requested by the device UE 10 with specific parameters (e.g., a positioning signal ID or a timing/frequency of the positioning signal) required for ranging/positioning.

It is noted that, as indicated in the initial section above, ranging can be performed in multiple ways. For instance, a device UE 10 may be equipped with beam forming capabilities, such that a ranging measurement can be directed to a certain anchor UE 14 and this "angular" information may be used for determining its position.

In a further (alternative) embodiment related to decentralized localization based on ranging measurements with the anchor UEs 14, the device UE 10 may receive an updated list of anchor UEs 14 located in its vicinity, e.g., from the LMF 34 or the RMF 36.

Note that the LMF 34 and/or the RMF 36 may create and keep updating this list of anchor UEs 14 resulting in a constantly updated constellation of ranging capable UEs whose locations are known a priori to the LMF 34 and/or the RMF 36. Optionally, to provide control for the network operator, the device UE 10 may be required to report the measurements to the LMF 34 and the LMF 36 together with an indication of the position of the device UE 10.

It is noted that if a PC5 interface is required, then device UEs 10 and anchor UEs 14 need to discover each other. Thus, the LMF 34 may need to interface with a network function in the 5G CN (e.g., the direct discovery name management function (DDNMF) or policy control function (PCF)) capable of authorizing the device UE 10 to discover anchor UEs 14 by means of (PC5) discovery messages.

The device UE 10 upon approaching and entering a ranging distance of one of the anchors UEs 14 of the ranging constellation 50, may be assisted to obtain its location coordinates through ranging measurements without actually being positioned by the network access devices 20 and/or the LMF 34.

In a still further (alternative) embodiment related to decentralized localization based on ranging measurements with the anchor UEs 14, the anchor UEs present in the ranging constellation 50 may be configured to advertise the (ranging-based) positioning service as a proximity service. Note that this may require some of the anchor UEs 14 to be assigned to a ranging proximity service. This may require the LMF 34 or RMF 36 to interact with a direct discovery name management function (DDNMF) or policy control function (PCF) in charge of assigning discovery parameters to UEs.

Upon connection to, subscription to and/or authorization for the proximity service for ranging-based positioning, the device UE 10 may receive discovery keys/parameters for accessing the positioning service (e.g., via a PC5 sidelink channel). Then, the device UE 10 may securely send (or receive) discovery messages for the ranging-based positioning service of the anchor UEs 14 of the ranging constellation 50 (e.g. via PC5 sidelink discovery messages).

The managing entity, PCF, LMF 34 or RMF 36 may provide the credentials (e.g. during initial provisioning of the ranging/location service on device UE 10, or during authorization/connection setup procedure between a device UE 10 and anchor UE 14, that may involve a message exchange between the anchor UE and the respective network function after which the anchor UE 14 may forward the data to device UE 10 and/or message exchange between device UE 10 and the respective network function via a relayed connection via the anchor UE 14) to device UE 10, which device UE 10 should use to securely connect to the ranging/location service and/or use to protect the data that device UE 10 sends to the ranging/location service.

Upon receiving (or sending) the discovery messages, an anchor UE 14 of the ranging constellation 50 may reply with (or include) the location and/or ranging measurements according to its device capabilities. This may be achieved by means of discovery messages or by configuring lower protocol layers (e.g., the physical (PHY) layer) to start transmitting positioning signals, communicating the timing and/or frequency and/or identity of the positioning signals to the device UE 10 (e.g., through the PC5 interface) and gathering the UE measurements of the received positioning signals over the PC5 interface.

In an embodiment related to positioning signals from anchor UEs 14, a configuration entity may assign a random looking assignment of positioning signals, e.g., a transmission time/schedule and/or a positioning signal ID and/or a timing/frequency pattern, which may not be regular, to the anchor UEs 14. At a time t0 a positioning signal p0 is used, at a time t1 a positioning signal pi is used, at a time t2 a positioning signal p2 is used, ..., at a time ti a positioning signal pi is used, ..., at a time tj a positioning signal pj is used. The positioning signals pi and pj may be chosen at random or in a random looking fashion from an available set of resources in an area. Furthermore, the time interval (ti+1 - ti) between successive signal transmissions may not be a fixed value. Thereby, it is difficult to track a UE transmitting positioning signals over a sidelink channel and a UE can only use those positioning signals if it is informed about the timing and identities over time. The above positioning signals pi, p2,..., pi might be as standard ones (e.g., defined in TS 36.211) or may differ e.g. in waveform, bandwidth, preamble, carrier, guard band and/or may include a pattern indicative of a positioning signal ID or anchor UE identity and may correspond to a different positioning signal ID or anchor UE identity at times t1, t2, ..., ti. This positioning signal ID or anchor UE identity is the one that determines, e.g., the pseudo-random sequence (e.g., associated with the positioning signal ID or anchor UE identity) or an encrypted/scrambled positioning signal ID or anchor UE identity that is transmitted as part of, encapsulated by, or over the positioning signal, or may determine a frequency shift of the positioning signal. The anchor UE identities and/or positioning signal IDs may also be used to determine/select the radio resources to use for transmitting/receiving the positioning signals. To this end, an access device or managing entity may define the resources per position signal ID or per anchor UE identity and provide the resource allocation information to the UEs involved (e.g., all UEs part of a constellation). The managing entity may have to ensure that multiple anchor UEs in close vicinity do not interfere with each other. Thus, the managing entity may have to assign anchor UE identities and/or positioning signal IDs at times t1, t2,...,ti to each anchor UE in an area in a way that they do not collide (e.g., to make sure that they do not use the same radio resource elements at the same time), and may use a secure connection or encrypted message (that only the intended recipient(s) can decrypt) to inform the UEs involved (e.g., all UEs of the ranging constellation) of the respective identities. Alternatively, the positioning signal IDs or anchor UE identities may be self-selected by the respective anchor UE 14 (or a device UE 10) according to a preconfigured randomization function (e.g., based on UTC time/System Frame Number (SFN)), that may be shared securely with UEs of the constellation and may use a secure connection or encrypted message (that only the intended recipient(s) can decrypt) to inform the UEs involved (e.g., all UEs of the ranging constellation) of the respective identities. Alternatively, the positioning signal IDs or anchor UE identities may be self-selected by the respective anchor UE 14 (or a device UE 10) according to a preconfigured randomization function (e.g., based on UTC time/System Frame Number (SFN)), that may be shared securely with UEs of the ranging constellation.

In a further embodiment related to the previous one, the managing entity makes use of random looking assignment of positioning signals for service authorization and revocation. A managing entity might only distribute, i.e., disclose, the random looking assignment of positioning signals, which are assigned to an anchor UE 14, to a device UE 10 that is authorized to use the service, e.g., authorized during an initial configuration phase. A given positioning signal pi out of the random looking positioning signals pi, p2, ... pi,... pj, might have a limited lifetime, for instance, a few seconds, a few minutes, etc. In this case, if a UE 10 has already been configured with positioning signals pi+1, pi+2,... , the UE 10 might be prevented (revoked) from using the ranging service by updating the random looking assignment of positioning signals pi+1, pi+2,... of anchor UE 14, and any other anchor UEs the UE 10 might rely on. Alternatively, the managing entity might only disclose to a UE 10 the positioning signals, which are assigned to an anchor UE, that are valid for a very limited amount of time so that the UE 10 can automatically no longer access the service as soon as this limited amount of time elapses. The above two described alternatives provide a practical way to revoke the use of the ranging/location service, rather than having to update the credentials in all related devices to reflect a revoked authorization.

The anchor UE 14 may provide the device UE 10 with a set of ranging parameters (e.g., the timing and identities of the positioning signals assigned to the anchor UE 14 or other configuration parameters or desired ranging parameters) through direct device to device communication or discovery (e.g., using sidelink/PC5), e.g., upon successful discovery as described in the above embodiment. This approach is useful for a device UE 10 that is out of coverage since the device UE 10 can then only receive those parameters from other ranging capable UEs through direct device to device communication or discovery (e.g., using sidelink/PC5).

Alternatively, the device UE 10 may receive the ranging parameters of anchor UEs 14 when joining a ranging service and/or location service and/or ranging-based positioning service, e.g., after authentication and authorization.

It is noted that if there are several ranging capable UEs, e.g., anchor UEs 14 that had responded to the device UE 10 with a discovery message or had voluntarily transmitted a discovery message, then the device UE 10 can estimate the distance and/or angle based on timing measurements on the respective discovery messages, and use the estimated distances and/or angles to estimate the location by means of e.g. triangulation/trilateration. To this end, the UEs transmitting discovery messages (e.g., anchor UE 14) may transmit synchronization signals and/or timing information to the receiving device (e.g., device UE 10). Alternatively, or additionally the timing of the scheduled resources for discovery (e.g., the sidelink discovery pool) can be used to determine the originating time of transmitting a discovery message. The discovery message may include timestamp information about when it was transmitted or time difference information (e.g., t4-t1 and/or t3-t2 in case of an FTM based technique). The discovery message may include Angle of Departure information. Device UE 10 may do the same in its discovery signals to another ranging enabled UE (e.g., an anchor UE 14). Alternatively, when only a few, e.g., 1, UEs 14 responded to the device UE 10 and/or if the discovery message includes location and the time of departure (TOD) information while the clocks of the device UE 10 and anchor UE 14 are synchronized, then the device UE 10 may calculate the distance based on the discovery message only and if sufficient information is available (e.g., if it can also measure the angle and/or if information about the altitude is provided to/from the other UE) it can estimate its position. This reduces the need of the device UE 10 to send other messages (such as particular ranging/position/sounding reference signals) to anchor UEs 14 for positioning information.

In order to improve the accuracy, a discovery message may be sent over multiple bands/frequencies, use a larger bandwidth, or be collocated/prepended/appended with a ranging reference signal. Some or all of the contents of the discovery message (e.g., an ID of the other ranging device) or a copy thereof may be transmitted as payload/encoded data of a ranging reference signal. Similarly, some or all of the contents of the ranging reference signal and/or e.g. ID or type or device identity related to the position/sounding signal may be transmitted as payload/encoded data of the discovery message.

The following embodiments describe some ranging-based positioning concepts based on discovery messages. These concepts can be adapted to the usage of positioning signals transmitted at PHY layer, e.g., as in existing positioning techniques or as described in the above embodiments.

In an embodiment related to open discovery with ToF measurement or carrier phase-based ranging, discovery messages in ProSe open discovery can be enhanced to include ranging capabilities. This can be achieved by configuring the anchor UEs 14 to transmit discovery messages following a given timing schedule known to the device UEs 10, so that the devices can be synchronized. The discovery message may include an identifier, e.g., a relay service code (RSC), or service identifier or application code, indicating a ranging service or location service or a ranging-based positioning service. Furthermore, the discovery messages may be enhanced to include a (fixed) identity (e.g., L2 identity) of the anchor UEs 14 (so that the device UE 10 can identify the anchor UE 14), the position of the anchor UE 14, and a positioning information (e.g., the location of the anchor UE or a carrier phase-based positioning signal used to transport the discovery message itself).

Based thereon, the device UE 10 can check the integrity of the received discovery messages, identify the anchor UE 14 distributing the discovery message, identify a ranging service or location service or a ranging-based positioning service based on the identifier, and extract distance information from the positioning information and the timing when the discovery message is received.

In an embodiment related to restricted discovery with round-trip time (RTT) measurement, discovery messages in ProSe restricted discovery can be enhanced to include ranging capabilities.

This can be achieved by enhancing the first message (i.e., discovery message) sent by device UE 10 to include an identifier (e.g., RSC) indicating the ranging service, location service, ranging-based positioning service and/or a ranging/position request. The device UE 10 is configured to start a timer when the discovery message is first sent out. The device UEs 10 may then receive an answer from the anchor UE 14 which may include the position Pa of the anchor UE 14 that can be verified and decrypted using discovery keys received by the device UE 10 after subscription.

The device UE 10 measures the timer upon reception of the answer from the anchor UE 14. The value of the timer corresponds to the RTT. The distance to the anchor UE 14 can then be calculated as RTT*c/2. Since the device UE 10 may also have received the position of the anchor UE 14, it knows that its position is on the circumference of a circle with radius RTT*c/2 and center at the position Pa of the anchor UE 14.

It is noted that the anchor UE 14 may require a significant time for processing the message, i.e., to decode and validate the initial discovery message sent from the device UE 10. Thus, the RTT calculation should not include the processing time of the anchor UE 14, i.e., the time at which the packet is not in air. To eliminate this processing time from the measured RTT, the reply from the anchor UE 14 might also include information of the processing time at the anchor UE (e.g., time t3-t2 as in FTM) to process the received discovery message and send a reply so that the device UE 10 can correct the RTT estimation accordingly. Alternatively, the device UE 10 may utilize time stamp values of the messages exchanged and/or time stamps sent separately by the anchor UE 14 in addition to the discovery messages using regular messages, if the time is measured using ranging signals e.g. PRS. Then, the device UE 10 may use its timer and time stamp values to deduct the processing time of the anchor UE 14.

The device UE 10 can then estimate its own position with two or more of such measurements.

In a still further embodiment related to decentralized localization based on ranging measurements with the anchor UEs 14, which can be used as an alternative to or in combination with the above corresponding embodiments, an out-of-coverage device UE 10 may request its current location information from a communicatively coupled anchor UE 14, that is calibrated for ranging measurements with device UE 10, e.g., by sending a message with a measurement result related to a ranging reference signal (e.g. ID and/or timing information) and/or estimated distance/angle to the anchor UE 14, optionally including information about a coordinate system to use, and optionally including altitude and/or velocity/accelerometer information. The message type (e.g., PC5_Location_Request or RRCLocationRequest) may indicate to the anchor UE 14 that the device UE 10 requests position information based on the provided information, which it may return (after calculation) in a response message to device UE 10.

Similarly, with a similar message that may include also position information or an identifier of a device or reference point, device UE 10 may request anchor UE 14 to provide/calculate/return a distance and/or angle between device UE 10 and the anchor UE 14 and/or the indicated device or reference point, after which the anchor UE 14 will return the resulting calculated distance and/or angle.

The anchor UE 14 may know its location or can request the location service of the core network 30 (e.g., network controller device) for its location coordinates based on positioning measurements with the network access devices 20 (e.g., gNBs) and translate the ranging measurement of the device UE 10 to a local location coordinate of the device UE 10.

Alternatively, the anchor UE 14 may report the ranging measurement of the device UE 10 along with its device ID to the LMF 34 for obtaining the location coordinates of the device UE 10, which are then calculated by the LMF.

Alternatively, the location coordinates of the anchor UE 14 may be shared with the device UE 10 which can use its ranging measurement and the location coordinate of the anchor UE 14 to calculate its own location coordinates.

In a still further embodiment related to decentralized localization based on ranging measurements with the anchor UEs 14, which can be used as an alternative to or in combination with the above corresponding embodiments, the anchor UE 14 may assist and/or improve the positioning accuracy and the position acquisition time for the entire ranging constellation by using non-3GPP communication channels (e.g., Wi-Fi, Bluetooth, etc.) to monitor and track beacon information (e.g. service set identifier (SSID), signal strength, beacon ID, beacon location, etc.) obtained from broadcast messages of other non-3GPP base stations (e.g., Wi-Fi access points or Bluetooth beacons) in the area.

It is noted that the non-3GPP information may also be broadcasted by the device UE 10 and/or anchor UE 14 depending on the device capabilities.

This beacon information may be sent to the LMF 34 and/or the RMF 36 when the anchor UE 14 observes the beacon information or if requested by the LMF 34 and/or the RMF 36.

The LMF 34 and/or the RMF 36 may be communicatively coupled with non-3GPP positioning systems (e.g., Wi-Fi positioning systems or Bluetooth positioning systems) to obtain the (geographical) location coordinates based on the beacon information.

It is noted that non-3GPP positioning systems (e.g., Wi-Fi positioning systems) can be used when there is a discontinuity in the positioning information system due to noncoverage or can be used always in addition to the conventional 3GPP positioning services. The device UE 10 may use a priori knowledge of the beacon information obtained from broadcast messages (if available) of non-3GPP technologies (e.g., Wi-Fi or Bluetooth) to assist the ranging service in determining and tracking of the trajectory information as described in one of the above embodiments. Moreover, the beacon information observed by the device UE 10 may be sent to the LMF 34 and/or RMF 36 via the anchor UE 14 of the ranging constellation 50. If a device UE 10 and the anchor UE 14 are time-synchronized, the timing information of the 3GPP RAT can be combined with the beacon information obtained from non-3GPP RAT to estimate the location of the device UE 10 at a particular point in time and assist in tracking of the trajectory. Alternatively, the non-3GPP beacon information may also be linked to the timing of the entire ranging constellation 50 or a particular anchor UE 14 even when the device UE 10 is not time-synchronized with any anchor UEs. Depending on the application, either the device UE 10 or the anchor UE 14 may calculate the clock time offset after the device UE 10 becomes time-synchronized with the anchor UE 14 and/or the ranging constellation 50.

Alternatively, two ranging capable devices may be able to support 3GPP as well as non-3GPP based ranging methods and/or may use licensed bands and unlicensed bands for performing the ranging measurements. For example, a device may support Time Difference of Arrival over PC5/sidelink as a 3GPP supported method and Wi-Fi Fine Timing Measurement or Bluetooth beacon, RTT, carrier-phase distance measurements or AoA/AoD measurements. A ranging enabled device may express support for these non-3GPP ranging methods in the discovery messages (e.g., PC5 ProSe discovery messages) and/or by sending a message to the other ranging device upon/after establishing a connection between the two ranging enabled devices. The ranging capable devices may indicate an order of preference amongst all supported 3GPP and non-3GPP ranging methods and/or the devices may select a preferred set of ranging methods based on a configured policy or environment/context information and/or application requirements and/or accuracy requirements. The ranging capable devices may use multiple ranging methods simultaneously and/or in sequence.

In another embodiment, a device UE 10 might require a positioning service from the positioning constellation and an anchor UE 14 might be in its surroundings. The device UE 10 might be a smart watch and the anchor UE 14 might be a smart phone. The exact location of the anchor UE 14 might be known to the managing entity by means of standard positioning signals transmitted by the access devices, e.g., gNBs. The managing entity might then determine the rough location of the device UE 10 given the fact that the device UE 10 is in range with the anchor UE 14 and the known location of the anchor UE 14.

In an embodiment related to carrier phase based ranging in sidelink direction, two or more anchor UEs 14 may transmit positioning signals featured by a very specific carrier signature over sidelink. A device UE 10 gets tightly time-synchronized with the two or more anchor UEs 14 and receives the positioning signals from the two or more anchor UEs, measures the number of carrier cycles $CC_i$ of each anchor UE positioning signal since transmission, and may derive the distance $D_i$ to each anchor UE 14 as $D_i = CC_i * \lambda$ where $\lambda$ denotes the wavelength of the positioning signals, and may estimate its position P based on the measured $D_i$ and the knowledge of the positions of the anchor UEs 14.

The measuring of the number of carrier cycles may be achieved by using a decoding of a code in the signal, and a computation and a phase measurement. The computation of the number of cycles may be based on decoding a known pseudo random code (PRC) inside the signal, and for each signal looking at which 'point in time' the PRC is as compared to the internal clock reference, from which a coarse number of cycles CC can be calculated. The fine part of CC (fractions of carrier cycles) can be obtained from a carrier signal phase measurement.

In an embodiment related to differential carrier phase based ranging, two or more anchor UEs 14 or wireless access devices 20 transmit positioning signals featured by a very specific carrier signature. An additional anchor UE (e.g., head anchor UE) is located at a well-known position (e.g., (x,y,z) coordinates) within the ranging constellation 50 and measures the positioning signals from the other two or more anchor UEs 14 or wireless access devices 20.

A device UE 10 is tightly time-synchronized with the head anchor UE and the anchor UEs 14 and receives the positioning signals from the two or more anchor UEs 14, measures the carrier of the positioning signals, and may estimate its position P based on it at time t, may receive from the lead anchor UE the current positioning signal error E_Lead that it measures itself at time t (E_Lead = P_Lead - P_REAL, where P_Lead is the position measured by the lead anchor UE based on the carrier phase and P_REAL is the real position of the lead anchor UE (e.g., pre-configured)), may obtain an enhanced differential positioning estimate by combining P and E_Lead since E_Lead is correlated with the error that the device UE 10 suffers. For instance, at time t:

$$P\_Corrected = P - E\_Lead$$

In the above description, all communication links may be based on the PC5 communication interface between two or more UEs.

In an embodiment related to RTT carrier phase based ranging between a device UE 10 and an anchor UE 14 (or wireless access device 20), the anchor UE 14 (e.g., a head anchor UE) (or wireless access device 20) transmits a positioning signal by using a well-defined carrier signal. The anchor UE 14 (or wireless access device 20) starts counting the number of carrier cycles CC.

The device UE starts retransmitting (a copy of) the received positioning signal or generates a (well-defined) carrier signal itself that it will transmit towards the anchor UE 14 (or wireless access device 20) as soon as it is received. The device UE 10 counts and may transmit the number CC_delay of carrier cycles that it took to start retransmitting the signal or to start transmitting its own generated carrier signal since it was first received. The anchor UE 14 (or wireless access device 20) stops its counter and reads the value of CC as soon as the signal from the device UE 10 has been received. The distance D between the device UE 10 and itself can then be obtained as

$$D=0.5*(CC - CC\_delay)*\lambda$$

where $\lambda$ refers to the wavelength of the carrier signal.

This embodiment can be enhanced by measuring not only the total number of wavelengths of the received carrier but also the phase of the carrier when the signal is received.

Moreover, the anchor UE 14 (or wireless access device 20) may need to wait the length of one carrier cycle to be able to correctly determine the signal returned from the device UE 10. Hence, the measured value of CC may probably be one carrier cycle too high at the time it can stop the timer, unless the signal can be recognized using a particular preamble. Therefore, a preamble may be used for recognizing the signal from device UE 10. Also, a preamble may be added to enable the device UE 10 to recognize the positioning signal for carrier-based ranging from the anchor UE 14 (or wireless access device 20).

In an embodiment, the device UE 10 and/or anchor UE 14 (or access device 20) may need to compensate for the length, placement and directionality of the antennas used for performing ranging measurements, in particular carrier-phase based ranging. For example in a car, an antenna may be quite long and/or placed quite far from the ranging receiving/measurement subsystem and/or ranging calculation signal subsystem and/or the subsystem creating and/or transmitting the ranging reference signal. The length of the respective antennas may need to be added to the distance D as per the above formula in case of carrier-phase based ranging or otherwise compensated for. Similarly, the distance between the transmitter unit of the ranging reference signal and the location of the antenna used for transmitting the signal and the distance between the ranging receiving/measurement subsystem and/or ranging calculation signal subsystem, may need to be added or otherwise compensated for. To this end, device UE 10 and anchor UE 14 (or access device 20) may exchange information through discovery message(s) and/or connection setup message(s) and/or ranging session initiation message(s) and/or configuration message(s) about antenna configuration, antenna ports (possibly together with information about the signals transmitted through those ports), antenna length, antenna placement/position relative to a reference coordinate, and/or orientation/angle/direction relative to a reference direction (which may be represented e.g. by vector in a coordinate system) or magnetic north. Information about the antenna port used for transmitting a signal may be encoded as part of a ranging reference signal.

In an embodiment related to carrier-sensing using multiple carriers, LTE vehicle-to-everything (V2X) communication can be used, which supports single-carrier frequency division multiple access (FDMA) and 10 MHz and 20 MHz channels. The channel is divided into 180 kHz resource blocks that include 12 subcarriers of 15 kHz each. In 5G R16 V2X, sidelink can operate in frequency range 1 (i.e., FR1, 410 MHz to 7.125 Ghz) and frequency range 2 (i.e. FR2, between 24.25 and 52.6 GHz). Transmissions can be done using orthogonal frequency division multiplexing (OFDM). The number of slots per subframe and the subcarrier for the OFDM waveform is flexible.

When considering carrier-phase based sensing, the usage of higher frequencies is advantageous in some situations, since the wavelength is shorter, and thus the error on the distance measurement can be lower. Furthermore, the usage of multiple carriers at different frequencies is advantageous. If multiple N carriers are used in the positioning signal transmitted at the physical layer, it is possible for the receiver to measure the received phase of each of the N carriers. Based on the N phase measurements, the receiver can transform N phase measurements at N frequencies into biased range measurements.

For instance, assuming a typical positioning reference signal (PRS), it can be observed that the PRS sequence $r_{l,ns}(m)$ involves a transmission in certain subcarriers/symbols defined in 3GPP TTS 36.211 where ns is the slot number, and I is the OFDM symbol. At the start of each OFDM symbol a pseudo-random sequence is transmitted where the pseudo-random sequence generator is initialized based on the ns or the cell identity NCell-ID. Therefore, the PRS sequence depends on the frame/slot timing (ns,l) and the physical cell identity. It is worth noting that the cell-specific frequency shift is given by NCell-ID mod 6. Existing PRS sequences have an effective reuse factor of six. When a UE configures itself or is configured (e.g. by a managing entity) as an anchor UE and sends a PRS sequence, then it will have to choose or be given/configured with an identifier such that it does not collide with other nearby anchor UEs.

Furthermore, PRS sequences are transmitted in pre-defined positioning subframes grouped by several consecutive subframes named positioning occasions that occur periodically, e.g., every 160, 320, 640, or 1280 subframes (or milli-seconds), and the number of consecutive frames might be 1, 2, 4, or 6 (TS 36.211). Another existing parameter is the subframe offset which defines the starting subframe PRS transmission relative to SFN=0. Current positioning techniques perform positioning by identifying the whole PRS sequence.

In the following embodiment of carrier phase-based ranging, the receiver may first identify the PRS itself. This might be based on timing (in which frames and slots), frequency (in which carriers), identity (which identity is used to generate the pseudo random sequence), duration (how many frames are used to transmit a PRS), and periodicity (every how many frames is a PRS transmitted). Since anchor UEs do not have a cell identifier as base stations, the UEs might use, e.g., a randomly chosen identifier in the generation of the pseudo random sequence. The PRS used by an anchor UE might also be determined by the managing entity. The managing entity might also configure an anchor UE with a policy determining the preferred PRS parameters or PRS signal, including alternative PRS signals in case, e.g., the preferred PRS signal is used by a different nearby anchor UE. Furthermore, in the case of carrier-phase based ranging, the receiver senses the received phase of each of the carriers at each of the symbols/resource elements used in the PRS signal. For instance, at the start of a used symbol. Since not all subcarriers are received simultaneously because of the way the PRS is defined, the receiver can measure the phase of different carriers at different points of time, and derive (due to the periodicity of the subcarriers) the received phase for all the carriers as if they were received at the same time. The receiver can map those measured phases for the different subcarriers to a range measurement.

It is worth noting that since multiple carriers are used, a UE might not require all of them. For instance, it might be enough for the UE to monitor only N' subcarriers, e.g., the first N' subcarriers of the PRS signal to achieve a suitable accuracy. The value N' might be configured by the managing entity. Furthermore, reducing the number of subcarriers that require tracking helps reducing the delay as well as energy consumption to obtain a ranging measurement and transmitting possible ranging related measurements.

Moreover, it is worth noting that if N' subcarriers are enough, then an approach might be to perform a measurement every N'*symbol_time seconds to obtain a measurement if the carriers used for carrier phase-based ranging/positioning are chosen to be next to each other. For instance, if N' = 6, it is possible to perform a measurement with the first six subcarriers and a second measurement with the next six subcarriers.

An alternative is to have, e.g., an alternating allocation. For instance, subcarriers i=2n with n=1,...,N' are used for a measurement and subcarriers i=2n+1 with n=1,...,N' are used for a second measurement. This spacing has the advantage of assigning the carriers in a more uniform manner. On the other hand, if the PRS is transmitted in a continuous manner, the ranging estimation could also be updated every time a new symbol using a new suitable carrier is received by using a window approach where the window keeps track of the last N' received suitable subcarriers. This allows reducing the delay to a single symbol time duration.

An alternative to determine whether two UEs are in LoS range is to exchange a positioning signal including subcarriers at both FR1 and FR2 frequencies. The measured signal strength of the positioning signal subcarriers at FR1 and FR2 frequencies is then used to determine the LoS features of the communication link. If the anchor UE and the UE are in LoS, then the positioning signal transmitted in the FR2 frequency will be received properly, but if there is an obstacle (e.g., a wall) in between, the received positioning signal will be received with lower power (e.g., RSRP) or lower signal quality (e.g. RSRQ) or not at all in comparison with the received positioning signal transmitted at a lower FR1 frequency. To this end, the transmitting UE may change the transmit power of the signal in the different subcarriers in such manner that a receiver would be expected to measure similar values for signal strength/quality (according to calibration information) and may include transmit power information as part of the positioning signal and/or a message that was exchanged beforehand (e.g., as part of the ranging session setup).

An alternative to determine the angle between two UEs which might be useful, e.g., in a remote control/TV scenario, requires the anchor UE to transmit sidelink synchronization signal blocks (SSSBs) through different beams. The UE can measure the received signal strength of each of the (SSSBs) of the anchor UE. The measurement can be used to determine the angle. For instance, a TV might embed an anchor UE with an antenna featured by five beams: beam 1 perpendicular to the plane of the TV, beam 2 with a 45 upwards angle, beam 3 with a 45 downwards angle, beam 4 with a 45 angle to the left, and beam 5 with a 45 angle to the right. The UE can measure the change in the signal strength of the SSSBs of the anchor UE while the user, e.g., presses a button. The change in the received signal strength of the SSSBs is the used to obtain, e.g., in which direction the user is moving the UE. Note that in this case, the button press on the UE by the user can trigger a request sent over the PC5 interface to transmit synchronization or positioning signals, in this case, SSSBs. The measurements might be sent back from the UE to the anchor UE over the PC5 interface.

In an embodiment that can be combined with any of the previous embodiments, the UE can request anchor UEs to temporally transmit positioning signals. The reason is that existing PRS signals transmitted by base stations follow a low frequency periodic pattern. However, many ranging scenarios might require the transmission of PRS signals at a higher frequency during a short period of time, as in the above example with the remote control (UE) and TV (anchor UE). In this case, the UE might send a resource scheduling request to an anchor UE over the PC5 interface requesting the transmission of positioning signals. The (lead) anchor UE might perform the resource allocation and coordinate the resource allocation with surrounding anchor UEs. For instance, it might choose PRS identifiers for the anchor UEs in such a way that they do not lead to interferences.

In an embodiment related to autoconfiguration of a UE as an anchor UE 14, a device UE 10 determines if it detects only a small number of positioning reference signals either from network access devices 20 (e.g., gNBs) or other anchor UEs 14 or the RSRP of a reference signal is under a predetermined threshold at the position of the device UE 10.

If so, the device UE 10 may decide to configure itself as an anchor UE 14 and start sending positioning signals.

It is noted that the device UE 10 may have been configured by the managing entity with a capability of being allowed of configuring itself as an anchor UE 14. This decision may be based on a policy deployed by the managing entity.

Fig. 7 schematically shows a signaling and processing diagram for ranging-based positioning services, that summarizes the multiple operation options based on the above embodiments. In this diagram, exchange of information and its direction is indicated by a corresponding arrow and processing steps are indicated by respective blocks, while the time proceeds from the top to the bottom of Fig. 7. The places where the processing steps take place or the start and end points of the information exchanges are indicated by the vertical dotted lines below the respective system component. Not all the steps might always be required and some steps might be executed multiple times for increased accuracy or continuous ranging-based positioning.

In an initial configuration step S701, the CN configures the anchor UEs (A-UE) as such, this may include forwarding control information for configuring at least one of e.g. discovery parameters, ranging constellation identifier(s), positioning signals and parameters, and positioning techniques. The anchor UEs might also be configured at this step with their specific location. This location might also be known (only) to the CN. Then in a subsequent step S702, the device UE sends to the CN a request to subscribe to a ranging-based positioning service. In response thereto, the CN checks whether the device UE is authorized to use this service, and if so, it provides the device UE in step S703 with at least one of e.g. discovery parameters, positioning signal parameters, and (preferred) ranging methods to use. This step finishes an initial configuration phase (CP).

Now, an operational phase (OP) starts with step S704, where the device UE sends a discovery message to anchor UEs to request ranging services. This message may be a restricted discovery message (e.g., *ProSe Model B Solicitation)* or may be skipped in ProSe Model A, or may be a *ProSe Model A Announcement* where the device UE requesting ranging services plays the role of an announcing UE. Note that by the time this message is sent by the device UE, the device UE might have first received sidelink synchronization signals that allow it to become synchronized to the anchor UEs.

The anchor UEs may collect the presence of the received discovery or connection setup or ranging session initiation message(s), and/or information from these message(s) (e.g., UE identity information, ranging capabilities, timing information, signal strength information) and send it to the CN in step S705. In an example, the lead anchor UE may send a combined report on behalf of the anchor UEs. Alternatively, each anchor UE may send the received messages that are aggregated in the CN.

In step S706, the CN may estimate the location of the device UE based on the (combined) report(s) received in step S705 and the locations of the anchor UEs. Alternatively, the CN may perform an initial estimate of the location of the device UE based on anchor UE report message(s) received in step S705. Depending on the accuracy of the estimated position, the CN may indicate (cf. step S707b) a need for more accurate ranging measurements between anchor UE(s) and the device UE, e.g., PRS based ranging estimates in subsequent steps.

In step S707a, the anchor UEs may reply to the device UE with a response message when a ProSe restricted discovery model B has been used. This message may also indicate that the anchor UEs are configured as announcing UEs and use ProSe Announcement discovery messages (model A). The discovery messages may be used (e.g., directly) for ranging purposes by the device UE or may be used to transmit configuration data required by the device UE to perform ranging in subsequent steps (e.g., if the device UE is out of range and initially lacks positioning parameters sent by the anchor UEs) and/or perform an initial position estimate (e.g., in case some or all of the messages contain location coordinate information of the respective anchor UE).

As an option, a further step 707b can be used, by means of which the CN sends an indication about the achieved or required accuracy to the anchor UEs. Depending on this indication from CN, the anchor UE can (re-)configure the ranging procedure, e.g., the transmission of PRS signals for ranging-based location estimation. This might imply that the ranging messages in steps S704-S715 might be exchanged longer or shorter or more often and/or with different signal characteristics. This might also imply that the anchor UEs skip the ranging procedure (steps S709 to S717) if the accuracy obtained in step S706 is already sufficient. If this optional step S707b is not present, then the usual flow of ranging steps S709 to S717 is followed.

In step S708, the device UE may obtain an initial range/location estimation based on the messages received from anchor UEs in step S707a, and potentially combined with (the timing and contents of) the message sent in step S704. The messages of steps S704 and S707a might be exchanged multiple times to increase the accuracy.

It is noted that if there are multiple anchor UEs that had responded to the device UE in step 707a, and some or all of the response messages contain location coordinate information of the respective anchor UEs, then the device UE can estimate its location based on these messages received in step S707a by triangulation/trilateration.

In step S709, the anchor UEs may send one or more positioning signals that are received by the device UE. Then, in step S710, the device UE may be able to perform an estimation of its range/location based on the positioning signals received in step S709. In case an initial estimation was made in step S708, the estimate of step S710 may improve the accuracy of the initial estimate.

Alternatively or in combination with the previous step S709, the device UE may also send in step S711 positioning signals that may be received/measured by the anchor UEs. A lead anchor UE may be in charge of collecting these measurements of the anchor UEs.

It is noted that the UE might also use other (types of) positioning signals (e.g., Sounding Reference Signals (SRS signals), or Channel State Information Reference Signals (CSI-RS)) or multiple types of positioning signals in a channel as prescribed by or requested by an anchor UE for more precise ranging measurement.

In step S712, the lead anchor UE may obtain the location/range of the device UE, locally, based on the positioning signals received by the lead anchor UE and/or one or more other anchor UE(s).

In step S713, the device UE may send measurements to one or more of the anchor UEs based on the exchanged discovery message(s) or positioning signals.

Then, in step S714, the lead anchor UE may obtain the location/range of the device UE, locally, based on the reported measurements of step S713. In case the location/range of the device UE was already locally determined in step S712, this may be an improved estimate based on the additional information provided by the reported measurements in step S713.

If the lead anchor UE computes the location/range of the device UE, the lead anchor UE may send this information in step S715 to the device UE. Similarly, if another anchor UE computes its distance to the device UE it may send this information in step S715 to the device UE as well.

Furthermore, in step S716, the lead anchor UE (or any other anchor UE or ranging capable UE or relay device) may send the received measurements to the CN which then estimates the location/range of the device UE in step S717. Typically, the lead anchor UE would send these measurements directly via an access device when it is in coverage, but it may delegate this task to another UE of the ranging constellation, or it may send these measurements indirectly via a relay device (e.g., ProSe UE-to-Network Relay UE), when out of coverage.

Finally, in step S718, the CN may export the ranging/position information to an external application function (AF) after authentication and authorization of the AF.

To summarize, a wireless system and methods for configuring two or more ranging capable devices to form a ranging constellation to support ranging-based positioning services have been described. Multiple challenges in improving location accuracy when using ranging measurements to derive the location coordinates have been addressed. In particular, timing at which the location information can be derived from ranging measurements and methods used for ranging-based location estimation have been described.

While the invention has been illustrated and described in detail in the drawings and foregoing description, such illustration and description are to be considered illustrative or exemplary and not restrictive. The invention is not limited to the disclosed embodiments. The proposed enhanced ranging-based positioning services can be implemented in all types of wireless networks, e.g. it can be applied to devices communicating using cellular wireless communication standards, specifically the 3rd Generation Partnership Project (3GPP) 5G and New Radio (NR) specifications. The 5G wireless communication devices can be different types of devices, e.g. mobile phones, smart watches, smart tags for location tracking and logistics, vehicles (for vehicle-to-vehicle (V2V) communication or more general vehicle-to-everything (V2X) communication), V2X devices, IoT hubs, IoT devices, including low-power medical sensors for health monitoring, medical (emergency) diagnosis and treatment devices, for hospital use or first-responder use, virtual reality (VR) headsets, etc.

Although some embodiments are described for ProSe relay and sidelink communication, the invention also applies to other types of relay devices, such as (smart) repeater devices, Integrated Access and Backhaul (IAB) nodes, or Wi-Fi Mesh APs.

Furthermore, the invention can be applied in medical applications or connected healthcare in which multiple wireless (e.g. 4G/5G) connected sensor or actuator nodes participate, in medical applications or connected healthcare in which a wireless (e.g. 4G/5G) connected equipment consumes or generates occasionally a continuous data stream of a certain average data rate, for example video, ultrasound, X-Ray, Computed Tomography (CT) imaging devices, real-time patient sensors, audio or voice or video streaming devices used by medical staff, in general IoT applications

involving wireless, mobile or stationary, sensor or actuator nodes (e.g. smart city, logistics, farming, etc.), in emergency services and critical communication applications, in V2X systems, in systems for improved coverage for 5G cellular networks using high-frequency (e.g. mmWave) RF, and any other application areas of 5G communication where relaying is used.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. The foregoing description details certain embodiments of the invention. It will be appreciated, however, that no matter how detailed the foregoing appears in the text, the invention may be practiced in many ways, and is therefore not limited to the embodiments disclosed. It should be noted that the use of particular terminology when describing certain features or aspects of the invention should not be taken to imply that the terminology is being re-defined herein to be restricted to include any specific characteristics of the features or aspects of the invention with which that terminology is associated.

A single unit or device may fulfill the functions of several items recited in the claims. The mere fact that certain measures are recited in mutually different dependent claims does not indicate that a combination of these measures cannot be used to advantage.

The described operations like those indicated in Fig. 7 can be implemented as program code means of a computer program and/or as dedicated hardware of the commissioning device or luminaire device, respectively. The computer program may be stored and/or distributed on a suitable medium, such as an optical storage medium or a solidstate medium, supplied together with or as part of other hardware, but may also be distributed in other forms, such as via the Internet or other wired or wireless telecommunication systems.

**Claims**

1. An apparatus for obtaining a location estimate of a target mobile device (10) within a wireless network, wherein the apparatus is adapted to:

   request a ranging service from a ranging constellation (50) formed by one or more ranging capable anchor devices (14) of the wireless network, wherein the ranging constellation (50) acts as a proxy for a positioning service provided in a geographical area;
   receive at least one response message from the ranging constellation (50);
   perform a range or location estimate or a ranging measurement based on the at least one response message; and
   forward the range or location estimate or a result of the ranging measurement to the ranging constellation (50) to support the positioning service.

2. The apparatus of claim 1, wherein the apparatus is adapted to perform the range or location estimate or ranging measurement based on discovery messages or carrier phase based ranging or positioning techniques.

3. The apparatus of claim 2, wherein the apparatus is configured to transmit a positioning signal to the target mobile device (10) or the anchor device (14) by using a predefined carrier signal, to count carrier cycles of the carrier signal until a response from the target mobile device (10) or the anchor device (14) has been received, and to determine a distance to the target mobile device (10) or the anchor device (14) based on the counted number of carrier cycles.

4. The apparatus of claim 1, wherein the apparatus is adapted to initiate a self-configuration of a ranging capable anchor device (14).

5. The apparatus of claim 1, wherein the apparatus is adapted to switch from determining location coordinates of the target mobile device (10) by a location service to determining location coordinates by the ranging constellation (50) based on ranging measurements.

6. The apparatus of claim 1, wherein the apparatus is adapted to obtain location coordinates of the target mobile device (10) from an anchor device (14) of the ranging constellation (50), the location coordinates being determined by using a set of ranging measurements.

7. The apparatus of claim 1, wherein the apparatus is adapted to perform ranging or sidelink-based positioning between the target mobile device (10) and one or more anchor devices (14) or between anchor devices (14) of the ranging constellation (50).

8. The apparatus of claim 1, wherein the apparatus is configured to perform at least one of transmitting an identifier to the target mobile device (10) or another ranging capable anchor device (14) for use to retrieve location coordinates from a location service or database, and providing authorization credentials to the target mobile device (10) or the other anchor device (14), and providing an authorization message or credentials to the location service or database, and granting permission for the retrieval by providing consent in its subscription or by providing consent through a network exposure function.

9. The apparatus of claim 1, wherein the apparatus is configured to indicate a number of anchor devices (14) and/or a set of identifiers of the number of anchor devices (14) and/or a constellation identifier as part of at least one message to request the ranging session.

10. The apparatus of claim 1 wherein the apparatus is configured to be provided with a list of approved constellation identifiers and/or ranging capable anchor devices (14) selectable for the ranging service.

11. The apparatus of claim 1, wherein the apparatus is configured to be provided with at least one policy that specifies a minimum number of anchor devices (14) and/or requirements on capabilities and/or characteristics of the anchor devices (14) to determine whether to request the ranging service or to determine which constellation or set of ranging capable anchor devices (14) to select/connect to for the ranging service.

12. The apparatus of claim 1, wherein the apparatus is configured by a managing entity or is adapted to configure itself to switch on a ranging service upon entering the geographical area or upon the target mobile device (10) entering the geographical area.

13. The apparatus of claim 1, wherein the apparatus is configured to use a signal quality or a result of a distance measurement to determine that the target mobile device (10) is sufficiently close and/or has a line of sight with at least one of the ranging capable anchor devices (14), in order to determine whether or not to initiate the ranging service.

14. The apparatus of claim 1, wherein the apparatus is configured to compensate the range or location estimate or the ranging measurement for a length, placement and/or directionality of at least one antenna used for performing ranging measurements.

15. A method of obtaining a location estimate of a target mobile device (10) within a wireless network, wherein the method comprises:

requesting a ranging service from a ranging constellation (50) formed by one or more ranging capable anchor devices (14) of the wireless network;
receiving at least one response message from the ranging constellation (50);
performing a range or location estimate or a ranging measurement based on the at least one response message; and
forwarding the range or location estimate or a result of the ranging measurement to the ranging constellation (50) to support a positioning service.

**Fig. 1**

**Fig. 2**

**Fig. 3**

**Fig. 4**

**Fig. 5**

# Fig. 6

# Fig. 7

Europäisches
Patentamt

European
Patent Office

Office européen
des brevets

# EUROPEAN SEARCH REPORT

**Application Number**

EP 22 15 8153

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/015059 A1 (TENNY NATHAN EDWARD [US]) 13 January 2022 (2022-01-13) * paragraph [0006] - paragraph [0045] * * figures 5-9 * ----- | 1-15 | INV. H04W64/00 G01S5/00 G01S5/02 H04W8/00 H04W76/14 |
| | | | TECHNICAL FIELDS SEARCHED (IPC) |
| | | | H04W G01S |

The present search report has been drawn up for all claims

| Place of search | Date of completion of the search | Examiner |
|---|---|---|
| Berlin | 7 July 2022 | Tous Fajardo, Juan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 15 8153

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2022

| Patent document cited in search report | | Publication date | Patent family member(s) | | Publication date |
|---|---|---|---|---|---|
| US 2022015059 | A1 | 13-01-2022 | CN | 114007185 A | 01-02-2022 |
| | | | TW | 202203671 A | 16-01-2022 |
| | | | US | 2022015059 A1 | 13-01-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Study on Ranging-based Services. *3GPP specification TR 22.855*
- Study on Ranging-based Services. *TR 22.855*
- **MARIO H. CASTAÑEDA GARCIA et al.** *A Tutorial on 5G NR V2X Communications*
- **M. S. BARTLETT.** *Smoothing Periodograms from Time-Series with Continuous Spectra*

- **J.CAPON.** Highresolution frequency-wavenumber spectrum analysis. *Proceedings of IEEE,* vol. 57 (8
- Functional stage 2 description of Location Services (LCS). *3GPP specification TS 23.271*
- 5G System (5GS) Location Services (LCS); Stage 2. *3GPP specification TS 23.273*